(19) **Europäisches Patentamt**
**European Patent Office**
**Office européen des brevets**

(11) **EP 4 129 438 B1**

(12) **EUROPEAN PATENT SPECIFICATION**

(45) Date of publication and mention
of the grant of the patent:
**05.11.2025 Bulletin 2025/45**

(21) Application number: **21775676.6**

(22) Date of filing: **23.03.2021**

(51) International Patent Classification (IPC):
**B01D 25/12** (2006.01) **F26B 11/16** (2006.01)
**H01M 4/88** (2006.01) **B01J 37/04** (2006.01)
**B01J 37/06** (2006.01) **B01J 37/14** (2006.01)
**H01M 8/10** (2016.01) **B01J 23/42** (2006.01)
**H01M 4/92** (2006.01)

(52) Cooperative Patent Classification (CPC):
**H01M 4/8825; H01M 4/926;** H01M 2008/1095;
Y02E 60/50; Y02P 70/50

(86) International application number:
**PCT/JP2021/012069**

(87) International publication number:
**WO 2021/193664 (30.09.2021 Gazette 2021/39)**

(54) **PRODUCTION SYSTEM AND PRODUCTION METHOD FOR CATALYST FOR ELECTRODE**

PRODUKTIONSSYSTEM UND PRODUKTIONSVERFAHREN FÜR KATALYSATOREN FÜR
ELEKTRODEN

SYSTÈME DE PRODUCTION ET PROCÉDÉ DE PRODUCTION D'UN CATALYSEUR
D'ÉLECTRODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2020 JP 2020050941
23.03.2020 JP 2020050942
28.09.2020 JP 2020161815**

(43) Date of publication of application:
**08.02.2023 Bulletin 2023/06**

(73) Proprietor: **N.E. Chemcat Corporation
Tokyo 105-6124 (JP)**

(72) Inventors:
• **NISHIBETTOU, Makoto**
**Tokyo 105-6124 (JP)**
• **SEKI, Yasuhiro**
**Tokyo 105-6124 (JP)**
• **TAKENOYA, Akinobu**
**Tokyo 105-6124 (JP)**

• **NAGAMORI, Kiyotaka**
**Tokyo 105-6124 (JP)**
• **IGARASHI, Hiroshi**
**Tokyo 105-6124 (JP)**
• **SHIINA, Hiroki**
**Tokyo 105-6124 (JP)**
• **TAMURA, Mie**
**Tokyo 105-6124 (JP)**

(74) Representative: **Peters, Hajo
Dehmel & Bettenhausen
Patentanwälte PartmbB
Herzogspitalstraße 11
80331 München (DE)**

(56) References cited:
JP-A- 2007 203 284    JP-A- 2007 214 130
JP-A- 2008 293 768    JP-A- 2012 220 041
JP-A- 2016 221 477    US-A1- 2003 104 936
US-A1- 2004 067 847    US-A1- 2016 233 517

**Description**

TECHNICAL FIELD

The present invention relates to an electrode catalyst production method.

BACKGROUND ART

The operating temperature of a so-called polymer electrolyte fuel cell (Polymer Electrolyte Fuel Cell: referred to as "PEFC" hereunder if necessary) is about room temperature to 80°C. Further, a PEFC can be made lighter in weight because inexpensive commodity plastics or the like may be employed as a material(s) compositing the fuel cell main body. Furthermore, a PEFC can have its solid polymer electrolyte membrane made thinner so that the electric resistance can be lowered whereby a loss in power generation can be reduced relatively easily. In this way, since a PEFC has many advantages, it can be applied to fuel-cell automobiles, cogeneration systems for household use and the like.

As an electrode catalyst for a PEFC, there is known, for example, an electrode catalyst with platinum (Pt) or a platinum (Pt) alloy as an electrode catalyst component being supported on carbon as a support. When using such electrode catalyst as an electrode catalyst for a fuel cell, if the electrode catalyst contains a large amount of impurities derived from the raw materials thereof and/or impurities mixed thereinto from a production facility thereof, there may not be achieved a satisfactory catalytic activity, and corrosion of the catalytic layer may occur such that the life of the fuel cell may be shortened. Thus, it is preferred that the impurity content, especially the chlorine content in the electrode catalyst be kept low. Here, examples of the impurities include chemical species belonging to the halogens (e.g. ions and salts thereof), and organic matters (organic acids, salts thereof, and condensates of organic acids).

For these reasons, there may be performed a step for eliminating chlorine after producing an electrode catalyst precursor as a raw material of an electrode catalyst; in such case, a step for drying the electrode catalyst precursor after a washing step will be performed. For example, in Patent documents 1 and 2, with regard to a drying method after washing, there are descriptions that there may be used, for example, a shelf-type dryer, a rotary dryer, a flash dryer, a spray dryer, a stirring dryer and a freeze dryer.

PRIOR ART DOCUMENTS

Patent documents

Patent document 1: JP-A-2013-158674
Patent document 2: JP-A-2014-42910

SUMMARY OF THE INVENTION

Problems to be solved by the invention

For example, if using a shelf-type dryer to dry an electrode catalyst precursor, in order to efficiently perform drying, there used to be performed a step(s) where a block of a wet electrode catalyst precursor would be finely crushed before being put into a shelf-type dryer and dried thereby, followed by also finely crushing the block of the dried electrode catalyst precursor. In the case of such conventional method for drying an electrode catalyst precursor, there were required a dedicated crusher for crushing the wet electrode catalyst precursor after washing, and a hammer mill for crushing the dried electrode catalyst precursor, whereby operation(s) for transferring the electrode catalyst precursor from the crusher to the dryer and then from the dryer to the hammer mill were necessary. However, a careful operation was required as the platinum making up an electrode catalyst precursor has a high activity and may thus lead to combustion upon sudden contact with the oxygen in the air. Further, in the case of the method for drying an electrode catalyst precursor with a shelf-type dryer, there has also been a problem that a drying speed is slow and a long period of time needs to be spent as the electrode catalyst precursor is to be dried by a radiant conductive heat while remaining still. In Patent documents 1 and 2, while there are descriptions about the possibility of using a stirring dryer to dry a fuel cell catalyst, no descriptions can be found on the specific configuration and operating condition of such stirring dryer.

The present invention was made in view of these circumstances, and is to provide an electrode catalyst production system and production method capable of drastically reducing the time and effort to produce an electrode catalyst, by omitting the operation for an operator to transfer an electrode catalyst precursor, and by shortening the drying time of the electrode catalyst precursor.

Means to solve the problems

An electrode catalyst production system has:

an electrode catalyst precursor production device for producing an electrode catalyst precursor as a raw material of an electrode catalyst;
a washing device for washing the electrode catalyst precursor; and
a drying device for drying the electrode catalyst precursor that has been washed by the washing device, using a stirring treatment device equipped with a stirring blade having a spiral ribbon impeller,

wherein the drying device includes executors for executing:

an introduction step for introducing the electrode catalyst precursor into a container main body of the stirring treatment device;
a drying processing step for drying the electrode catalyst precursor by heating and depressurizing the container main body, and stirring and mixing the electrode catalyst precursor inside the container main body with the stirring blade;
a cooling step for cooling the electrode catalyst precursor by cooling and depressurizing the container main body, and stirring and mixing the electrode catalyst precursor inside the container main body with the stirring blade;
a slow oxidation step for performing a slow oxidation treatment on the electrode catalyst precursor by supplying air to the container main body; and
a retrieving step for retrieving the electrode catalyst precursor inside the container main body.

The electrode catalyst production system may be configured in a manner such that the stirring blade includes:

a rotary main shaft for rotating the stirring blade when rotated by a driving device;
the spiral ribbon impeller for stirring and mixing the electrode catalyst precursor inside the container main body; and
rotor blade supporting pillars connecting the rotary main shaft and the spiral ribbon impeller,

wherein the rotary main shaft and the rotor blade supporting pillars are each formed into the shape of a hollow tube,
a gas ejection hole is provided on a lower side of a tip portion of each rotor blade supporting pillar, and
the rotary main shaft is joined to a flow path of a gas.

The present invention is to provide an electrode catalyst production method for producing an electrode catalyst. This electrode catalyst production method has:

an electrode catalyst precursor producing step for producing an electrode catalyst precursor as a raw material of an electrode catalyst;
a washing step for washing the electrode catalyst precursor; and
a drying step for drying the washed electrode catalyst precursor that has been washed in the washing step, using a stirring treatment device equipped with a stirring blade having a spiral ribbon impeller,

wherein the drying step includes:

a drying processing step for drying the electrode catalyst precursor by heating and depressurizing a container main body, and stirring and mixing the electrode catalyst precursor inside the container main body with the stirring blade;
a cooling step for cooling the electrode catalyst precursor by cooling and depressurizing the container main body, and stirring and mixing the electrode catalyst precursor inside the container main body with the stirring blade; and
a slow oxidation step for performing a slow oxidation treatment on the cooled electrode catalyst precursor by supplying air to the container main body.

The electrode catalyst production method may further have:
a retrieving step for retrieving the electrode catalyst precursor inside the container main body,
wherein the retrieving step may include a scraping step for downwardly ejecting a gas from a gas ejection hole provided at a tip of each rotor blade supporting pillar supporting the spiral ribbon impeller.
The electrode catalyst production method may further have:

a first analysis step for analyzing properties of the electrode catalyst precursor obtained through the drying step;
a reslurry step for again preparing a slurry by mixing the electrode catalyst precursor obtained through the drying step and an ion-exchange water; and

a catalyst cake preparation step for preparing multiple solid catalyst cakes with water content ratios thereof being adjusted to those of given ranges, by drying the slurry obtained through the reslurry step.

In the electrode catalyst production method, a stirring type drying device used in the catalyst cake preparation step may be the stirring treatment device.

In the electrode catalyst production method, a stirring device-equipped reactor may be used in the reslurry step.

In the electrode catalyst production method, the reactor may be the stirring treatment device.

In the electrode catalyst production method, the water content ratio of the catalyst cake may be lower than 80 wt%.

The electrode catalyst production method may further have:

a second analysis step for measuring the water content ratio of the catalyst cake obtained through the catalyst cake preparation step.

Effects of the invention

In the case of the electrode catalyst production system and production method the operation for an operator to transfer the electrode catalyst precursor can be omitted, and the drying time of the electrode catalyst precursor can be shortened, thus making it possible to drastically reduce the time and effort for producing an electrode catalyst having a low halogen content, particularly a low chlorine content.

BRIEF DESCRIPTION OF THE DRAWINGS

FIG.1 is a block diagram showing a preferable embodiment of the electrode catalyst production system of the present disclosure.

FIG.2 is a side view showing a preferable embodiment of a washing device for use in the electrode catalyst production method of the present invention

FIG.3 is a perspective view showing a preferable embodiment of an operational state of a dewatering device in a plate closing step of the electrode catalyst production method of the present invention.

FIG.4 is a perspective view showing a preferable embodiment of an operational state of the dewatering device in an injection step of the electrode catalyst production method of the present invention.

FIG.5 is a perspective view showing a preferable embodiment of an operational state of the dewatering device in a normal washing step of the electrode catalyst production method of the present invention.

FIG.6 is a perspective view showing a preferable embodiment of an operational state of the dewatering device in a reverse washing step of the electrode catalyst production method of the present invention.

FIG.7 is a perspective view showing a preferable embodiment of an operational state of the dewatering device in a plate opening step of the electrode catalyst production method of the present invention.

FIG.8 is a perspective view showing a preferable embodiment of an operational state of the dewatering device in a cake peeling step of the electrode catalyst production method of the present invention.

FIG.9 is a perspective view showing a preferable embodiment of an operational state of the dewatering device in a filter cloth washing step of the electrode catalyst production method of the present invention.

FIG.10 is a perspective view showing a preferable embodiment of an operational state of the dewatering device in a compression step of the electrode catalyst production method of the present invention.

FIG.11 is a schematic view showing a preferable embodiment of a drying device of the electrode catalyst production method of the present invention.

FIG.12 is a perspective view showing a preferable embodiment of a stirring blade of the drying device of the electrode catalyst production method of the present invention.

FIG.13 is a schematic view showing a preferable embodiment of an operational state of the drying device in a drying step of the electrode catalyst production method of the present invention.

FIG.14 is a schematic cross-sectional view showing an example of a structure of an electrode catalyst (core-shell catalyst) produced by the electrode catalyst production method of the present invention.

FIG.15 is a schematic cross-sectional view showing another example of a structure of an electrode catalyst (core-shell catalyst) produced by the electrode catalyst production method of the present invention.

FIG.16 is a schematic cross-sectional view showing another example of a structure of an electrode catalyst (core-shell catalyst) produced by the electrode catalyst production method of the present invention.

FIG.17 is a schematic cross-sectional view showing another example of a structure of an electrode catalyst (core-shell catalyst) produced by the electrode catalyst production method of the present invention.

FIG.18 is a flow chart showing a preferable embodiment of a flow of the electrode catalyst production method of the present invention.

FIG.19 is a flow chart showing a preferable embodiment of a flow of a washing step in the electrode catalyst production method of the present invention.

FIG.20 is a flow chart showing a preferable embodiment of a flow of the drying step in the electrode catalyst production method of the present invention.

FIG.21 is a block diagram showing another preferable embodiment of the electrode catalyst production system of the present invention.

FIG.22 is a flow chart showing a preferable embodiment of a flow of a reslurry step in the electrode catalyst production method of the present invention.

FIG.23 is a schematic view showing a dropping funnel used in a mixing test of the reslurry step in the electrode catalyst production method of the present invention.

FIG.24 is a set of graphs showing changes in a heating temperature of a container main body, an internal temperature of the container main body, a temperature of an electrode catalyst precursor and a water content ratio of a cake with time in a drying processing step of the present invention.

FIG.25 is a set of graphs showing changes in the heating temperature of the container main body, the internal temperature of the container main body, the temperature of the electrode catalyst precursor and the water content ratio of the cake with time in the drying processing step of the present invention.

MODE FOR CARRYING OUT THE INVENTION

With reference to the drawings, described hereunder are preferable embodiments of the electrode catalyst production method of the present invention.

[First embodiment]

<Electrode catalyst production system>

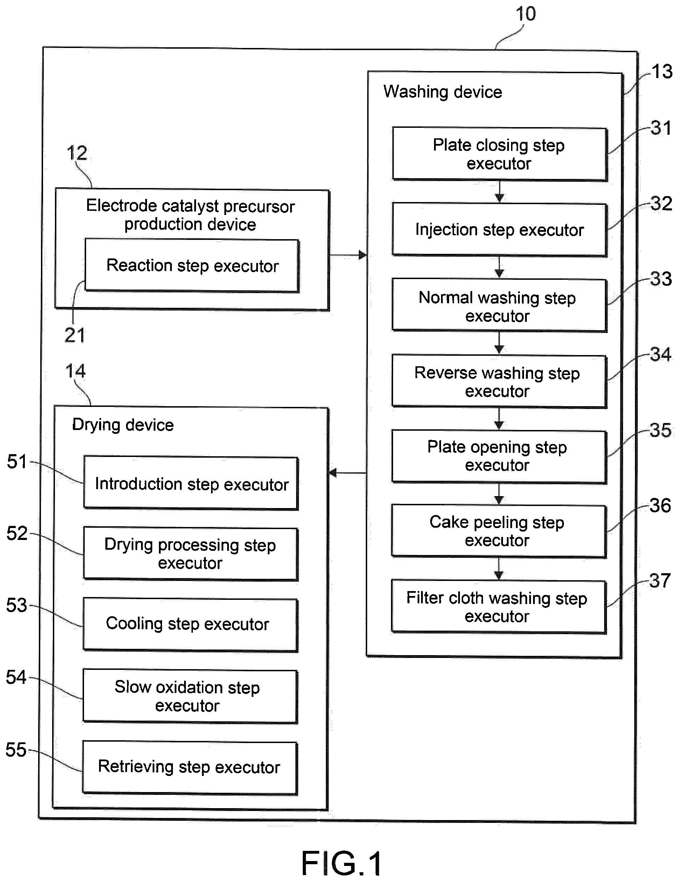

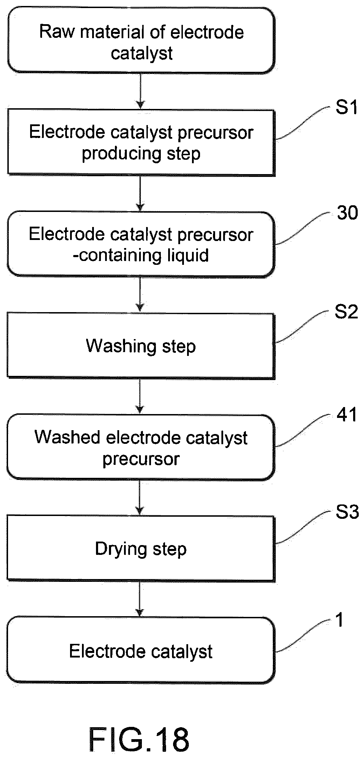

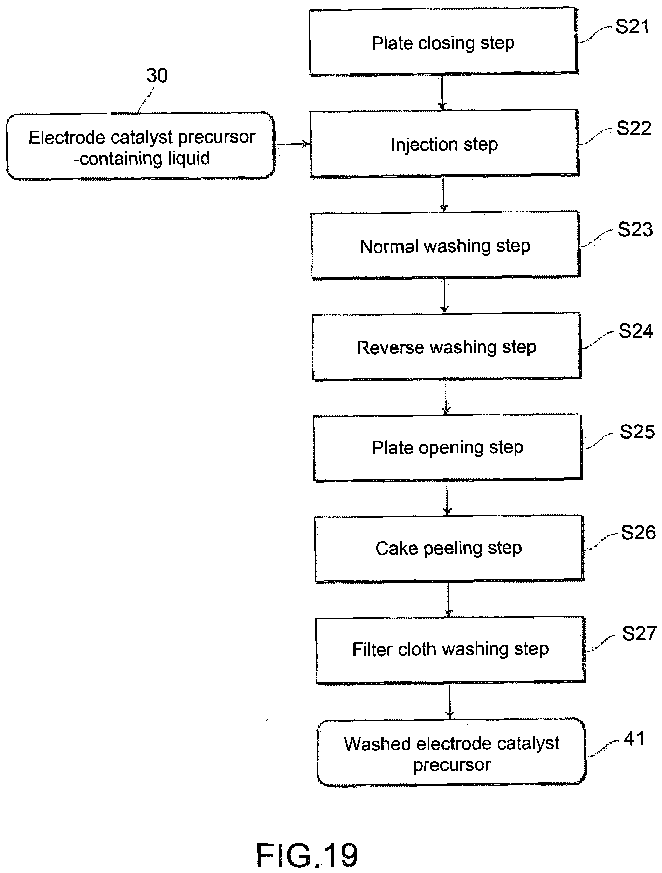

FIG.1 is a block diagram showing an outline of an electrode catalyst production system of a first embodiment. An electrode catalyst production system 10 has an electrode catalyst precursor production device 12 for producing an electrode catalyst precursor as a raw material of an electrode catalyst 1 (see FIG.18); a washing device 13 for washing the electrode catalyst precursor by filter press; and a drying device 14 for drying the washed electrode catalyst precursor 41 (see FIG.19) that has been washed by the washing device 13, using a stirring treatment device equipped with a stirring blade having a spiral ribbon impeller.

(Electrode catalyst precursor production device)

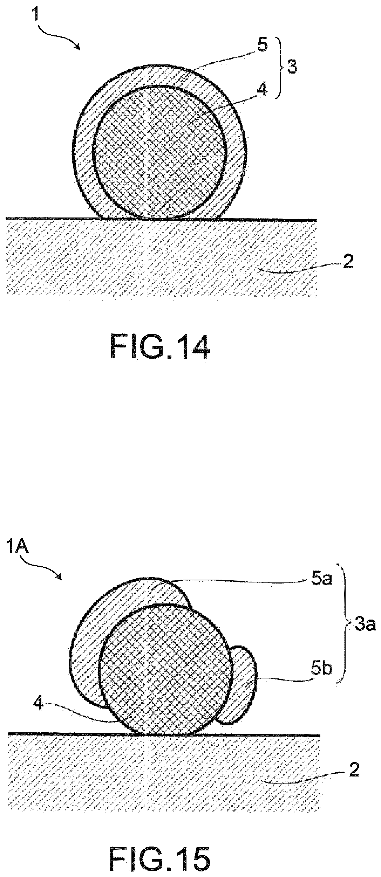

The electrode catalyst precursor production device 12 is to produce the electrode catalyst precursor as the raw material of the electrode catalyst 1. The electrode catalyst precursor production device 12 includes a reaction step executor 21 for executing a reaction step for producing the electrode catalyst precursor. In the reaction step, the electrode catalyst precursor as the raw material of the electrode catalyst 1 is produced by supporting catalyst components (core part 4, shell part 5) of the electrode catalyst 1 on a support 2 (see FIG.14). There are no particular restrictions on the production method of the electrode catalyst precursor so long as the method is capable of supporting the catalyst components of the electrode catalyst 1 on the support 2. For example, there may be listed production methods employing, for example, an impregnation method where a solution containing the catalyst components of the electrode catalyst 1 is brought into contact with the support 2 so as to impregnate the support 2 with the catalyst components; a liquid phase reduction method performed by putting a reductant into a solution containing the catalyst components of the electrode catalyst 1; an electrochemical deposition method such as an underpotential deposition (UPD) method; a chemical reduction method; a reductive deposition method effected by an adsorbed hydrogen; a surface leaching method involving an alloy catalyst; an immersion plating method; a sputtering method; and a vacuum deposition method.

(Washing device)

The washing device 13 is to wash the electrode catalyst precursor produced by the electrode catalyst precursor production device 12 via filter press. At such washing device 13, not only the washing of the electrode catalyst precursor is carried out, but filtration and dewatering are also carried out as well.

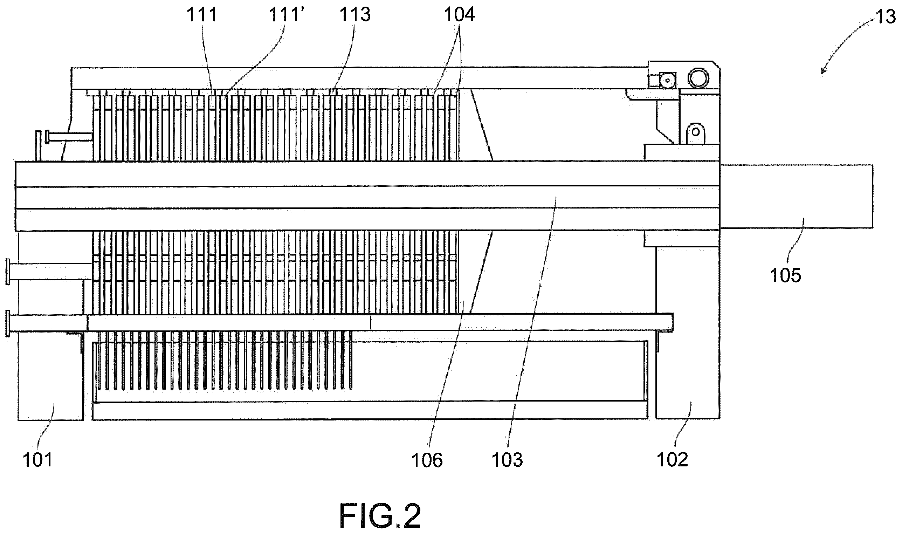

FIG.2 shows an example of the washing device 13 for performing filter press. The washing device 13 shown in this drawing is such that a plurality of dewatering devices 104 are horizontally aligned in parallel on a guide rail 103 bridged between a front frame 101 and a rear frame 102. These dewatering devices 104 are supported in a manner such that they are capable of moving on the guide rail 103 along the horizontal direction. An electric cylinder 105 may for example be supported at the rear frame 102 so that the dewatering devices 104 will be clamped by a pressing member 106 reciprocating due to a driving force of the electric cylinder 105. Such filter-press washing device 13 is conventionally known, and there is known a one disclosed in, for example, Japanese Patent No.5950207. Particularly, as for the dewatering device 104, there is known a one disclosed in, for example, Japanese Patent No.5327000.

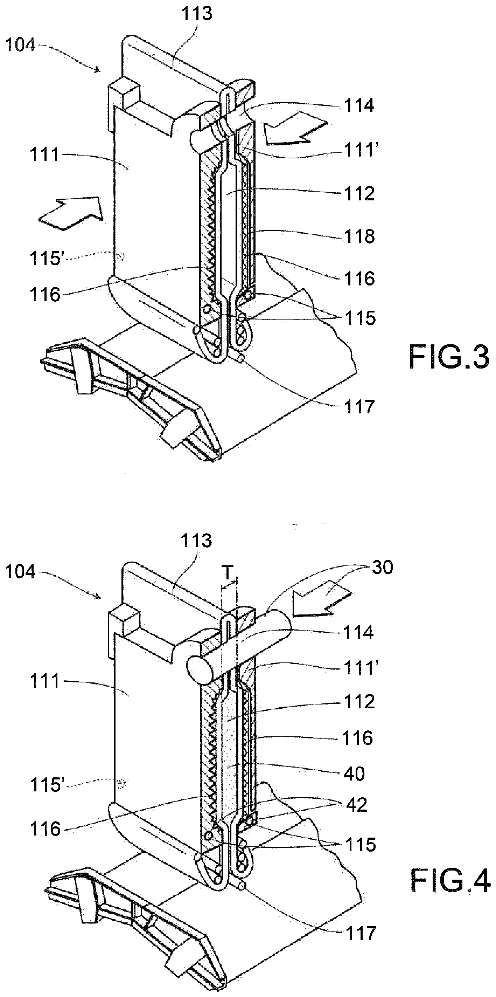

An outline of a flow for performing washing by filter press is described (see FIG.3 to FIG.10). At first, by supplying a stock liquid 30 to a filter chamber 112 formed between filter plates 111, 111' that are closed, the stock liquid 30 will pass through a filter cloth 113 and thus be filtrated, whereby a filtrate 42 will then be discharged to the outside. A solid matter captured by the filer cloth 113 will be dewatered while forming a cake layer. After dewatering is over, the electric cylinder 105 will be contracted to open the plurality of the filter plates 111, 111' all together, and at the same time discharge a dewatered cake 40 while allowing the filter cloth 113 to travel downward.

As shown in the block diagram of FIG.1, the washing device 13 includes a plate closing step executor 31, an injection step executor 32, a normal washing step executor 33, a reverse washing step executor 34, a plate opening step executor 35, a cake peeling step executor 36 and a filter cloth washing step executor 37, as executors for respectively executing a plate closing step, an injection step, a normal washing step, a reverse washing step, a plate opening step, a cake peeling step and a filter cloth washing step. Described hereunder are the structures of the steps S21 to S27 that are also shown in a flow diagram of a later-described FIG.19 illustrating the production method of the electrode catalyst 1.

[Plate closing step]

The plate closing step S21 is a step for forming the filter chamber 112 by clamping together the filter plates 111, 111', and is executed by the plate closing step executor 31. FIG.3 is a drawing showing one dewatering device 104 taken out of the washing device 13 shown in FIG.2, and illustrates a preferable embodiment of an operational state in the plate closing step S21. The plate closing step executor 31 is such that by driving the electric cylinder 105 so as to move the pressing member 106 toward the front frame 101, the two filter plates 111, 111' of each dewatering device 104 will be brought close and then clamped together to form the filter chamber 112.

[Injection step]

The injection step S22 is a step for injecting the electrode catalyst precursor-containing liquid (stock liquid) 30 into the filter chamber 112 from a stock liquid supply tube 114 so as to filtrate the liquid, and then discharging the filtrate 42 from filtrate discharge outlets 115, 115'; the injection step S22 is executed by the injection step executor 32. FIG.4 is a drawing showing one dewatering device 104 taken out of the washing device 13 shown in FIG.2, and illustrates a preferable embodiment of an operational state in the injection step S22. By means of the injection step executor 32, once the electrode catalyst precursor-containing liquid 30 has been injected into the filter chamber 112 from the stock liquid supply tube 114, the water content of the electrode catalyst precursor-containing liquid 30 shall ooze into a filter bed 116 through the filter cloth 113 and then be discharged to the outside from the filtrate discharge outlets 115, 115'. In this way, the electrode catalyst precursor-containing liquid 30 injected into the filter chamber 112 is filtrated. That is, while the solid content in the electrode catalyst precursor-containing liquid 30 will remain in the filter chamber 112 as an electrode catalyst precursor-containing cake 40, the water content of the electrode catalyst precursor-containing liquid 30 will be discharged to the outside as the filtrate 42.

Further, in this injection step S22, the electrode catalyst precursor-containing cake 40 is formed in such a manner that the thickness thereof falls into a range that has been experimentally determined in advance. The thickness of the cake 40 is previously and experimentally determined in consideration of a washing degree and a washing time that are required for the electrode catalyst precursor used.

Here, if the electrode catalyst used employs a conductive carbon as its support, it is preferred that a thickness T of the cake 40 at the time of the injection step S22 be adjusted to 5 to 10 mm. When the thickness T of the cake 40 is not larger than 10 mm, there can be relatively easily achieved a sufficient washing effect by adjusting a washing time in the later-described normal washing step and/or reverse washing step. When the thickness T of the cake 40 is larger than 10 mm, there will be observed a greater tendency where a sufficient washing effect cannot be achieved even by extending the washing time in the later-described normal washing step and/or reverse washing step.

Further, when the thickness T of the cake 40 is not smaller than 5 mm, cracks are unlikely to be formed in the cake, and there will thus be observed a greater tendency for preventing the formation of a path(s) through which a washing water passes by without passing through the cake when flowing from a surface of the cake on the upstream side toward a surface thereof on the downstream side.

[Normal washing step]

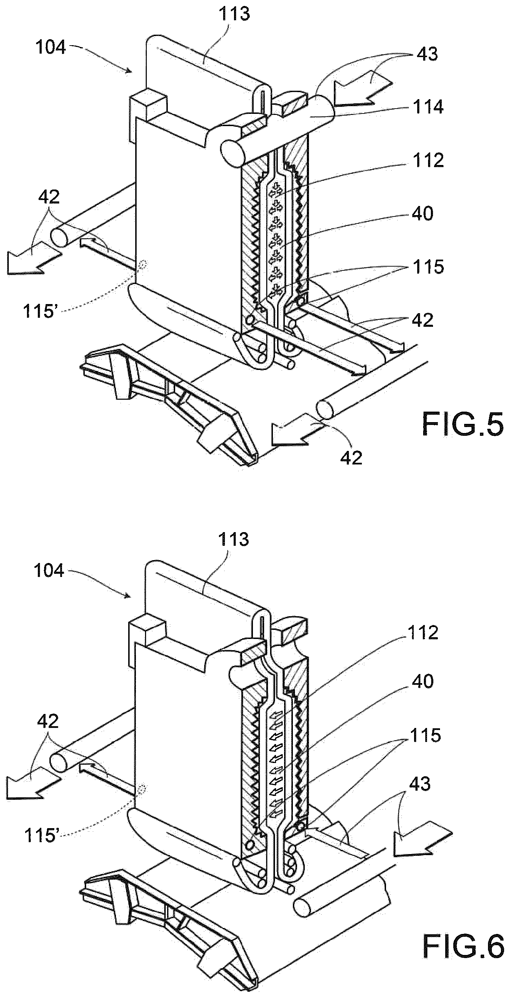

The normal washing step S23 is a step for supplying a washing water 43 from the stock liquid supply tube 114 to the filter chamber 112, allowing the washing water 43 to pass through the electrode catalyst precursor-containing cake 40, and then discharging the washing water 43 from the filtrate discharge outlets 115, 115'; the normal washing step S23 is executed by the normal washing step executor 33. FIG.5 is a drawing showing one dewatering device 104 taken out of the washing device 13 shown in FIG.2, and illustrates a preferable embodiment of an operational state in the normal washing step S23. By means of the normal washing step executor 33, the washing water 43 will be flowed from the stock liquid supply tube 114 toward the filtrate discharge outlets 115, 115', thereby washing the electrode catalyst precursor-containing cake 40 remaining in the filter chamber 112 as a result of the injection step S22. In this way, an electric conductivity $\rho$ of the filtrate that is measured by a JIS-standard testing method (JIS K0522) can be lowered, and a halogen content, particularly a chlorine content in the electrode catalyst precursor can be reduced.

In the normal washing step S23, while performing washing, it is preferred that the temperature of the washing water 43 be switched at the moment when the electric conductivity $\rho$ of the filtrate has reached a value that is as large as or smaller than a given value. For example, at the moment when the electric conductivity $\rho$ of the filtrate has reached a value that is as large as or smaller than the given value, the washing water 43 may be switched from a normal temperature water (e.g. 23°C) to a heated water (e.g. 70°C). It is preferred that the given value of the electric conductivity $\rho$ of the filtrate be a value selected from a range of 20 to 40 $\mu$S/cm. The temperature of the normal temperature water is preferably 20 to 25°C. The temperature of the heated water is preferably 60 to 80°C.

[Reverse washing step]

The reverse washing step S24 is a step for supplying the washing water 43 from the filtrate discharge outlet(s) 115 to the filter chamber 112, allowing the washing water 43 to pass through the electrode catalyst precursor-containing cake 40, and then discharging the washing water 43 from the filtrate discharge outlet(s) 115' which is different from the filtrate discharge outlet(s) 115 from which the washing water 43 is supplied; the reverse washing step S24 is executed by the reverse washing step executor 34. FIG.6 is a drawing showing one dewatering device 104 taken out of the washing device 13 shown in FIG.2, and illustrates a preferable embodiment of an operational state in the reverse washing step S24. The dewatering device 104 has for example at least two filtrate discharge outlets 115, 115'. Contrary to the normal washing step S23, by means of the reverse washing step executor 34, by flowing the washing water 43 from the filtrate discharge outlet(s) 115 toward the filter chamber 112, the electrode catalyst precursor-containing cake 40 remaining in the filter chamber 112 can be washed. The filtrate 42 is for example discharged from the filtrate discharge outlet(s) 115' which is different from the filtrate discharge outlet(s) 115 from which the washing water 43 is supplied. By performing the reverse washing step S24, the electric conductivity $\rho$ of the filtrate can be further lowered, and the halogen content, particularly the chlorine content in the electrode catalyst precursor can be further reduced.

In the reverse washing step S24, while washing can be performed with a normal temperature water (e.g. 23°C), it is preferred that washing be performed with a heated water (e.g. 70°C) from the very start since the electric conductivity $\rho$ of the filtrate will have already decreased to a certain extent at the end of the normal washing step S23. The temperature of the heated water is preferably 60 to 80°C.

[Plate opening step]

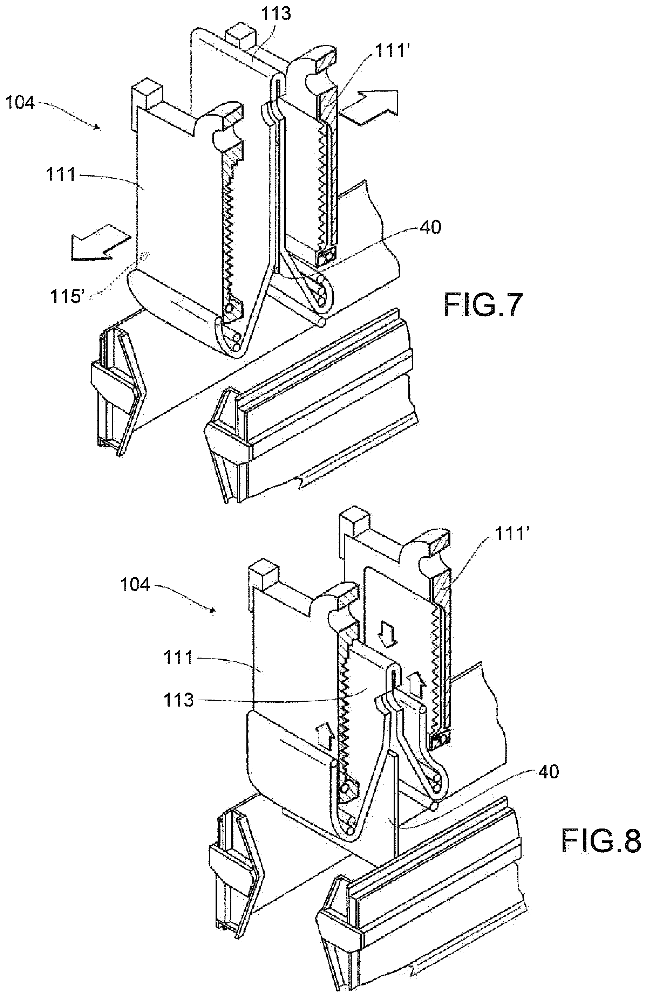

The plate opening step S25 is a step for opening the filter plates 111, 111' forming the filter chamber 112, and is executed by the plate opening step executor 35. FIG.7 is a drawing showing one dewatering device 104 taken out of the washing device 13 shown in FIG.2, and illustrates a preferable embodiment of an operational state in the plate opening step S25. The plate opening step executor 35 is such that by driving the electric cylinder 105 so as to move the pressing member 106 toward the rear frame 102, the clamping of the dewatering devices 104 will be unlocked. In this way, the two filter plates 111, 111' of each dewatering device 104 will move apart from each other so that the filter chamber 112 will be opened.

[Cake peeling step]

The cake peeling step S26 is a step for bringing down the filter cloth so as to peel and drop the electrode catalyst precursor-containing cake 40 that has been dewatered; the cake peeling step S26 is executed by the cake peeling step executor 36. FIG.8 is a drawing showing one dewatering device 104 taken out of the washing device 13 shown in FIG.2, and illustrates a preferable embodiment of an operational state in the cake peeling step S26. By means of the cake peeling step executor 36, once the two filter plates 111, 111' of the dewatering device 104 have moved apart from each other by a given distance, the filter cloth 113 holding the electrode catalyst precursor-containing cake 40 will travel downward. Thus, the electrode catalyst precursor-containing cake 40 will be automatically peeled from the filter cloth 113.

[Filter cloth washing step]

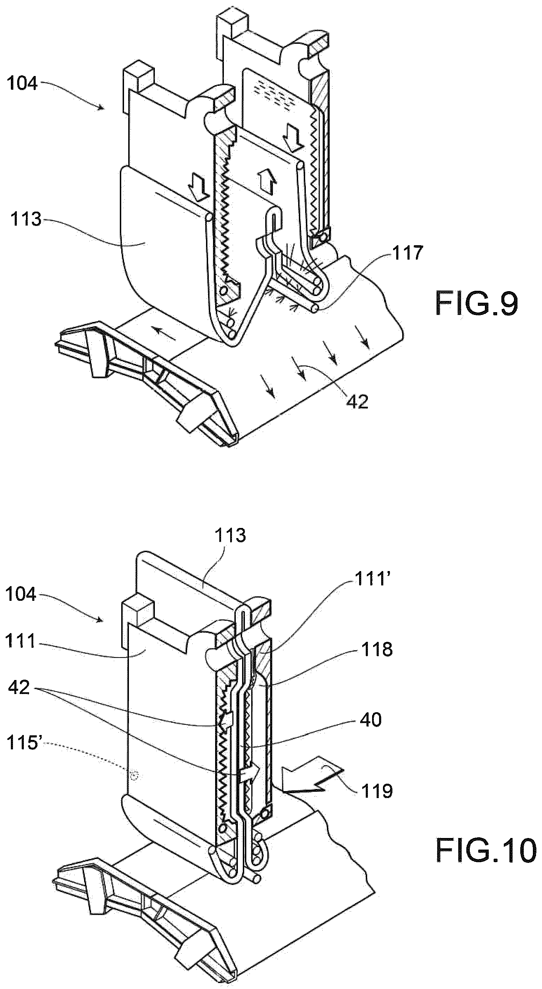

The filter cloth washing step S27 is a step for washing the filter cloth 113 with the washing water 43 after the cake peeling step S26, and is executed by the filter cloth washing step executor 37. FIG.9 is a drawing showing one dewatering device 104 taken out of the washing device 13 shown in FIG.2, and illustrates a preferable embodiment of an operational state in the filter cloth washing step S27. After the electrode catalyst precursor-containing cake 40 has been peeled from the filter cloth 113, the filter cloth 113 will travel upward and return to its original position. By means of the filter cloth washing step executor 37, while the filter cloth 113 is travelling upward, the washing water 43 will be supplied from a washing water tube 117 provided in a lower region of the dewatering device 104, using a filter cloth-washing pump (not shown). By spraying such washing water 43 onto the filter cloth 113, the filter cloth 113 will be washed for the sake of clogging prevention of the filter cloth 113, and the electrode catalyst precursor or the like that has adhered to the filter cloth 113 will be reliably collected. That is, since a discharged water at the time of washing the filter cloth contains the electrode catalyst precursor, it is preferred that the electrode catalyst precursor be all collected. In this way, by flushing so as to collect the electrode catalyst precursor that has adhered to the filter cloth 113, a yield of the electrode catalyst precursor can be improved. Moreover, by for example washing the filter cloth 113 while repeatedly having the same travel upward and downward, the amount of the electrode catalyst precursor collected can be further improved.

[Compression step]

Here, a compression step may be performed after the normal washing step S23 and/or after the reverse washing step S24. The compression step is a step for further compressing and dewatering the electrode catalyst precursor-containing cake 40, and is executed by a compression step executor (not shown). FIG.10 is a drawing showing one dewatering device 104 taken out of the washing device 13 shown in FIG.2, and illustrates a preferable embodiment of an operational state in the compression step. By means of the compression step executor, by injecting a pressurized water 119 into a diaphragm 118 provided at the one filter plate 111', the electrode catalyst precursor-containing cake 40 can be further compressed and dewatered. By means of the compression step, a solid content concentration of the electrode catalyst precursor-containing cake 40 will increase such that there can be produced an electrode catalyst precursor-containing cake 40 having an extremely low water content ratio.

Here, it is preferable to employ a configuration where the pressurized water 119 is to be drawn from the diaphragm 118 after the compression step is over, because there will be no more pressing by the diaphragm 118, and the filter cloth 113 being pressed by the diaphragm 118 can thus be easily peeled from the cake 40.

Moreover, in this compression step, there may be employed a configuration where a diaphragm (not shown) is also provided at the other filter plate 111. In such case, the pressurized water will also be injected into the diaphragm (not shown) provided on the filter plate 111 side, whereby the electrode catalyst precursor-containing cake 40 can then be compressed and dewatered. Even in this case, it is preferable to employ a configuration where the pressurized water is to be drawn from the diaphragm after the compression step is over, because there will be no more pressing by the diaphragm (not shown), and the filter cloth 113 being pressed by the diaphragm (not shown) can thus be easily peeled from the cake 40.

In the above descriptions, one dewatering device 104 is described; in the case of the washing device 13 shown in FIG.2, since all the dewatering devices 104 are capable of operating in an identical manner, a quantity to be treated at one time with one device can be increased such that the production efficiency of the electrode catalyst can be improved. Further, since the dewatering device(s) 104 described above has a large filtration area and employs a high pressure-resisting structure, a treatment speed can be improved. Furthermore, since the introduction of the stock liquid, the discharge of the cake and then the washing of the device can all be carried out in a fully automatic manner, the time and effort spent in treatment in the washing step can be saved. In addition, since a resin material, a lining material or the like may be selected as a material of the device, the device will be able to have a high corrosion resistance.

[Electric conductivity ρ of filtrate]

Treatment conditions such as a normal washing time in the normal washing step S23 and a reverse washing time in the reverse washing step S24 are adjusted such that the electric conductivity ρ of the filtrate obtained after the normal washing step S23 and/or after the reverse washing step S24 will be as large as or smaller than a predetermined value when measured by the JIS-standard testing method (JIS K0522). For example, the washing effect is enhanced if the washing time in the reverse washing step and the washing time in the normal washing step are of similar length. "Similar" refers to a notion that there may be a difference of 0 to 15 min (an absolute value of a difference between the washing time in the normal washing step and the washing time in the reverse washing step). Further, the filtrate is the liquid discharged from the filtrate discharge outlet(s) after performing washing, and it is preferred that there be used all the filtrates discharged in such step.

The predetermined value of the electric conductivity $\rho$ of the filtrate obtained after the normal washing step S23 is preferably a value selected from a range of not larger than 20 $\mu$S/cm. The predetermined value of the electric conductivity $\rho$ of the filtrate obtained after the reverse washing step S24 is preferably a value selected from a range of not larger than 10 $\mu$S/cm. When the electric conductivity $\rho$ of the filtrate is not larger than 10 $\mu$S/cm, the concentration of the chlorine (Cl) and bromine (Br) species contained in the electrode catalyst precursor shall be reduced to such a degree that the electrode catalyst can be put to practical use as an electrode catalyst for use in a fuel cell.

As the washing water 43 used in the washing device 13, while a pure water such as an ultrapure water may be used, it does not necessarily have to be a pure water. For example, there may be used an ion-exchange water or the like having a pH of 6 to 8 and an electric conductivity $\rho_i$ of smaller than 10 $\mu$S/cm when measured by the JIS-standard testing method (JIS K0522).

Here, in the washing step(s) of the present embodiment, although there are employed a washing method and a filtration method that utilize filter press, there may also be employed a washing method and a filtration method that utilize a conventional centrifugal separator (not shown) or the like.

(Drying device)

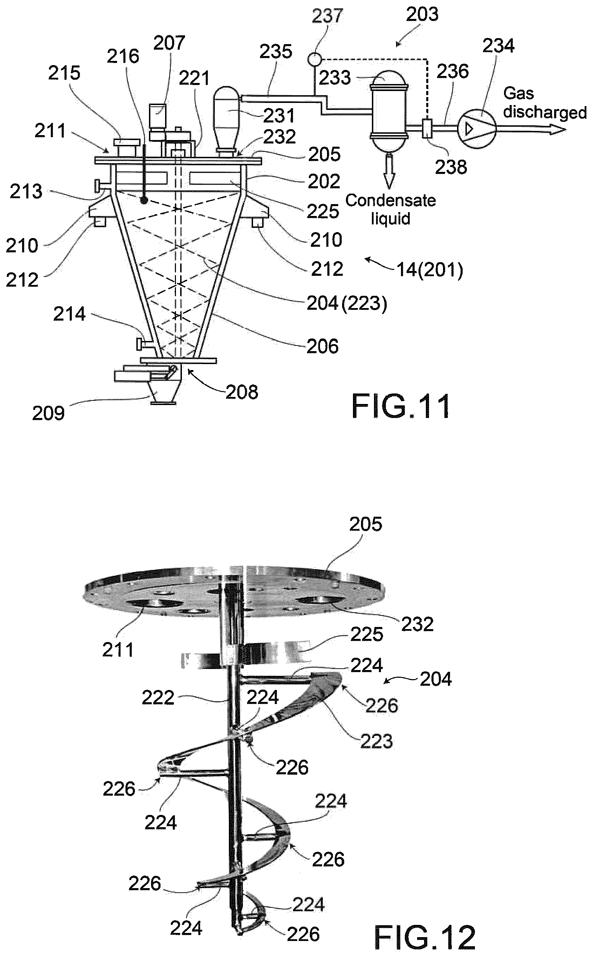

FIG.11 shows a schematic structure of the drying device 14 of the present invention. The drying device 14 serves to dry the electrode catalyst precursor that has been washed by the washing device 13 by means of a stirring treatment device 201 equipped with a stirring blade 204. The stirring treatment device 201 as a drying device mainly includes a container main body 202 formed as an inverted cone-shaped hollow container; a decompression mechanism 203 for reducing the pressure inside the container main body 202; and the stirring blade 204. The container main body 202 is such that an upper portion of the container main body 202 is covered by a lid 205 that is detachably provided with respect to the container main body 202; that provided on a peripheral wall of the container main body 202 is a jacket 206 for flowing a steam S as a heating medium for heating the inner region of the container main body 202; and that provided on an outer surface of the container main body 202 are supporting portions 210, 210 for supporting the container main body 202. Provided on lower surfaces of the supporting portions 210, 210 are load cells 212, 212 with which changes in weight can be confirmed; by installing the supporting portions 210, 210 in an installation site via the load cells 212, 212, the container main body 202 will be able to be suspended at the installation site.

Further, the stirring blade 204 is provided so that it can stir the inner region of the container main body 202; a driving device 207 of the stirring blade 204 is provided on the lid 205 at the upper portion of the container main body 202; and formed at the top of the cone as a lower end of the container main body 202 is an opening 208 from which the electrode catalyst precursor inside the container main body 202 can be taken out. A retrieving valve 209 is provided at this opening 208; by operating and opening such retrieving valve 209, the electrode catalyst precursor inside the container main body 202 can be taken out. Moreover, a supply port 211 is provided on the lid 205 at the upper portion of the container main body 202, and a supply valve 215 is provided at this supply port 211; by operating such supply valve 215 so as to open the supply port, the electrode catalyst precursor can be supplied to the container main body 202.

In addition, the jacket 206 has a heating medium injection port 213 into which the steam S is to be injected, and a heating medium discharge outlet 214 for discharging the steam S. Further, a temperature indicator controller 216 is provided at the container main body 202; in this way, the temperature of the electrode catalyst precursor inside the container main body 202 can be monitored, whereby the volume of the steam S to be supplied to the heating medium injection port 213 and the volume of the steam S to be discharged from the heating medium discharge outlet 214 can be adjusted, thus making it possible to adjust the temperature of the electrode catalyst precursor inside the container main body 202. Furthermore, the heating medium injection port 213 is also configured to be able to allow a cooling medium C to be injected thereinto other than the heating medium; and the heating medium discharge outlet 214 is also configured to be able to discharge the cooling medium C therefrom other than the heating medium.

FIG.12 is a perspective view of the stirring blade 204. The stirring blade 204 includes a rotary main shaft 222 penetrating the center of the lid 205 and being extended therefrom; a spiral ribbon impeller 223 that is attached to the tip of the rotary main shaft 222 and rotates together with the rotary main shaft 222; an arm(s) 224 as rotor blade supporting pillars connecting the rotary main shaft 222 and the spiral ribbon impeller 223; and a vortex breaker 225 that is provided at the rotary main shaft 222 and is arranged above the spiral ribbon impeller 223. The rotary main shaft 222, the spiral ribbon impeller 223, the arms 224 and the vortex breaker 225 are configured in an integral manner.

The rotary main shaft 222 is built into the driving device 207 via a sealing unit 221 (see FIG.11); by driving this driving device 207, the rotary main shaft 222 will rotate, whereby the spiral ribbon impeller 223, the arms 224 and the vortex breaker 225 that are integrally configured with the rotary main shaft 222 will be rotated. Thus, the rotary main shaft 222 is able to rotate the stirring blade 204 when the rotary main shaft 222 itself is rotated by the driving device 207. Further, the rotary main shaft 222 is formed into the shape of a hollow tube, and is joined to and communicated with each arm 224 that is likewise formed into the shape of a hollow tube. Further, an end portion of the rotary main shaft 222 on the driving device 207 side is configured in such a manner that it is joined to and communicated with a flow path of a gas G for scraping, and that the gas G is able to be injected into the rotary main shaft 222 by means of, for example, a later-described slow oxidation step executor 54 and retrieving step executor 55, where the gas G may for example be a nitrogen gas, a normal-pressure air, a mixed gas prepared by mixing a nitrogen gas and an oxygen gas at an arbitrary ratio with the concentration of the oxygen gas being adjusted, a mixed gas prepared by mixing a nitrogen gas and air at an arbitrary ratio with the concentration of the oxygen gas being adjusted, or a high-pressure air.

As can be seen from FIG.11, the driving device 207 uses a geared motor or the like, and the stirring blade 204 is to be rotated by adjusting a rotation number to a given value. Further, the driving device 207 has a position detector (not shown) for detecting the rotation and position of the stirring blade 204. A dry seal and a mechanical seal are for example attached to the sealing unit 221, and the sealing unit 221 is thus configured in such a manner that treatment can be handled even when the inner region of the container main body 202 is in a high-vacuum condition or high-pressure condition.

The spiral ribbon impeller 223 is formed into such a spiral shape that when the stirring blade 204 is placed in the container main body 202, the spiral ribbon impeller 223 itself shall be arranged with a slight clearance being maintained along an inner wall surface of the conical container main body 202; as the spiral ribbon impeller 223 rotates in the container main body 202, the electrode catalyst precursor will rise along the inner wall surface of the container main body 202. Further, the spiral ribbon impeller 223 is formed so that the width of its ribbon is formed wider toward an upper region; the spiral ribbon impeller 223 is configured in such a manner that powder conveyance will be performed at a constant ratio on each cross-sectional surface of the container main body 202 in the vertical direction. Here, as shown in FIG.12, although the spiral ribbon impeller 223 of the present embodiment employs a single ribbon blade, it may also employ a double ribbon blade.

As can be seen from FIG.12, the arms 224 support the spiral ribbon impeller 223 so as to allow the spiral ribbon impeller 223 to be reliably fixed to the rotary main shaft 222. Further, a gas ejection hole 226 for scraping is provided on a lower side of the tip portion of each arm 224; after the gas G has been injected into the rotary main shaft 222 from the flow path of the gas G, the gas G will then pass through the rotary main shaft 222 and each arm 224 before being ejected from each gas ejection hole 226, whereby accumulation of the electrode catalyst precursor can be prevented at the time of a later-described retrieving step S35.

As the vortex breaker 225 rotates in the container main body 202, the electrode catalyst precursor rising along the inner wall surface of the container main body 202 will be guided toward the center part of the container main body 202. Thus, a circulatory flow of the electrode catalyst precursor will be guided downward at the center part of the container main body 202, thereby preventing a sorting effect owing to a turbid stream at a layer surface at the time of free fall.

Here, in FIG.12, the vortex breaker 225 is arranged in such a manner that a clearance is present between the vortex breaker 225 and an inner surface of the lid 205. However, in the present invention, the vortex breaker 225 may also be configured in such a manner that it is integrally arranged so as to be in contact with the inner surface of the lid 205. Even in such case, the aforementioned sorting effect can be prevented.

Going back to FIG.11, the decompression mechanism 203 is now described; 231 represents a bag filter provided on an exhaust hole 232 of the lid 205, and a liquid and/or gas evaporated from the electrode catalyst precursor in the container main body 202 will be discharged through this bag filter 231. Further, 233 represents a condenser as a condensing appliance, and is to condense a liquid flowing from the bag filter 231. This condenser 233 and the exhaust hole 232 of the lid 205 are connected by a connection tube 235 through the bag filter 231. Further, 234 represents a vacuum pump connected to the condenser 233 by a suction tube 236; by driving this vacuum pump 234, the liquid and/or gas evaporated from the electrode catalyst precursor will flow from inside the container main body 202 to the bag filter 231 and the condenser 233. Further, a pressure indicator controller 237 is provided on the connection tube 235 so that the pressure inside the container main body 202 can be adjusted if performing drying under a reduced pressure. With the aid of a control signal of the pressure indicator controller 237, a control valve 238 provided on the suction tube 236 will be adjusted so as to adjust a degree of vacuum sucked by the vacuum pump 234. Here, a gas and vapor flowing from the bag filter 231 through the connection tube 235 will be subjected to a condensing treatment at the condenser 233 where a component(s) susceptible to condensation shall be separated from the gas as a condensate liquid. The gas separated will be sucked into the vacuum pump 234 through the suction tube 236, and then discharged from this vacuum pump 234. Here, there may also be employed a configuration where an air blow nozzle (not shown) is provided at a lower portion of the container main body 202, whereby a depressurized state of the container main body 202 can be restored to a normal pressure state by introducing an inert gas or air through the air blow nozzle.

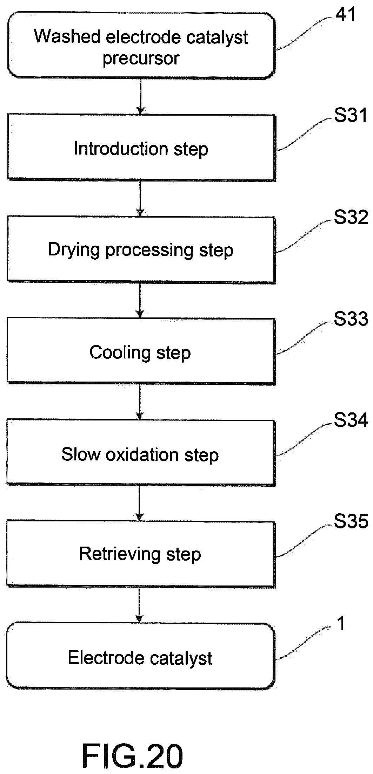

As shown in the block diagram of FIG.1 and the flow chart of FIG.20, the drying device 14 includes an introduction step executor 51, a drying processing step executor 52, a cooling step executor 53, a slow oxidation step executor 54 and a retrieving step executor 55 as executors for respectively executing an introduction step S31, a drying processing step S32, a cooling step S33, a slow oxidation step S34 for performing a slow oxidation treatment on a cooled electrode catalyst precursor, and a retrieving step S35 for retrieving the electrode catalyst precursor that has been subjected to the slow oxidation treatment. The steps S31 to S35 are described hereunder.

[Introduction step]

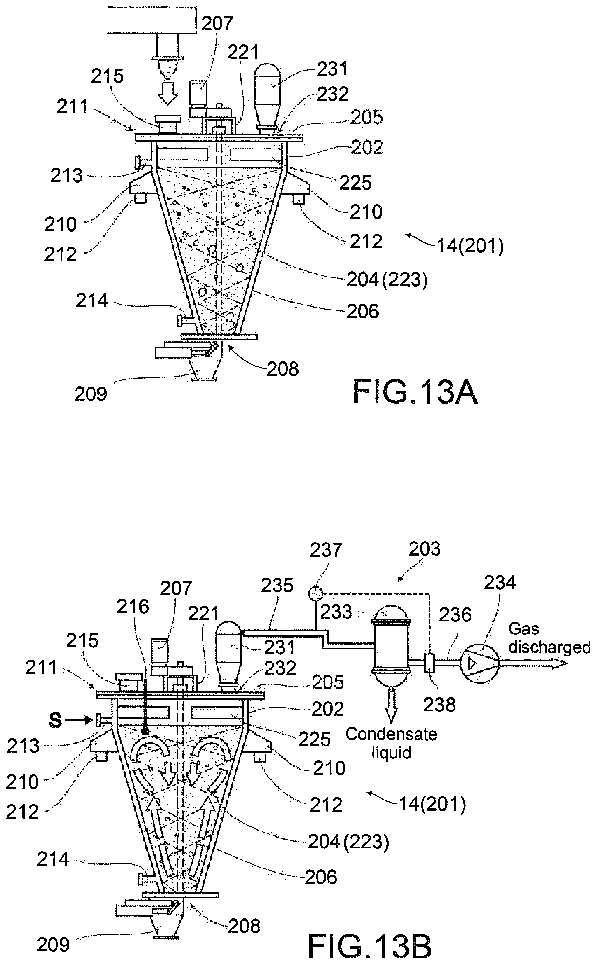

The introduction step S31 is a step for introducing the washed electrode catalyst precursor into the drying device 14, and is executed by the introduction step executor 51. The step is now described with reference to FIG.13A; the introduction step executor 51 operates and opens the supply valve 215 of the stirring treatment device 201 to introduce the electrode catalyst precursor with a given water content ratio into the container main body 202 from the supply port 211. It is preferred that the water content ratio of the electrode catalyst precursor be measured in advance. As a method for introducing such electrode catalyst precursor, the electrode catalyst precursor may be introduced by a manual operation using a funnel or the like; or as shown in FIG.13A, the electrode catalyst precursor may be directly introduced without manual intervention from, for example, a tube or conveyor belt transporting the electrode catalyst precursor. Here, the weight of the electrode catalyst precursor introduced is to be measured by the load cells 212, 212. In addition, before this introduction step S31, there may also be performed a preheating step for preheating the inner region of the container main body 202 to a given temperature by injecting the steam S into the jacket 206. Next, the introduction step executor 51 operates and closes the supply valve 215 to seal the container main body 202, thus completing the introduction step S31.

[Drying processing step]

The drying processing step S32 is a step for drying the electrode catalyst precursor that has been introduced into the container main body 202 (step for performing so-called vacuum drying), and is executed by the drying processing step executor 52. The step is now described with reference to FIG.13B in combination with for example FIG.11; the drying processing step executor 52 stirs and mixes the electrode catalyst precursor in a way such that the driving device 207 is driven to rotate the stirring blade 204, the vacuum pump 234 is driven to release the gas inside the container main body 202 so as to reduce the pressure therein, and an operating pressure is adjusted to a given pressure via the pressure indicator controller 237. The rotation speed of the stirring blade 204 is preferably 40 to 80 rounds per minute; and the operating pressure is preferably 5 to 20 kPa (gauge pressure). Further, the drying processing step executor 52 injects the steam S from the heating medium injection port 213 into the jacket 206 via the temperature indicator controller 216, and heats the container main body 202 with the heat conduction of the steam S, thereby allowing the electrode catalyst precursor inside the container main body 202 to be dried with the temperature thereof being adjusted to a given temperature (drying temperature). Moreover, heat generation caused by the stirring of the stirring blade 204 shall contribute to the drying of the electrode catalyst precursor. It is preferred that the drying temperature be a value selected from a range of 50 to 150°C. Here, the operating pressure and the heating temperature may also be changed in the midst of the drying processing step for the purpose of adjusting a drying time, by measuring the temperature (product temperature) of the electrode catalyst precursor and then observing a degree of change in such product temperature.

The circulatory flow of the electrode catalyst precursor inside the container main body 202 in the drying processing step S32 is now described in greater detail; as the stirring blade 204 rotates, the electrode catalyst precursor will rise along the inner wall surface of the container main body 202. Next, there is carried out a circulation where once the electrode catalyst precursor has been gathered at the center part of the container main body 202 by the vortex breaker 225 provided above the spiral ribbon impeller 223, the electrode catalyst precursor will immediately descend from this center part to get into the layer.

Further, the vapor and gas evaporated from the electrode catalyst precursor will be sucked by the vacuum pump 234, and a powder dust will be filtrated and captured by the bag filter 231. Next, the vapor and gas will flow into the condenser 233 through the connection tube 235 so as to be cooled and turned into a condensate liquid by the condenser 233, where the condensate liquid will be collected, and a gas will then be discharged by the vacuum pump 234. By having the vapor and gas evaporate from the electrode catalyst precursor in such manner, the weight of the electrode catalyst precursor will change. The weight of the electrode catalyst precursor inside the container main body 202 at that time is measured by the load cells 212, 212; the water content ratio of the electrode catalyst precursor at the moment is calculated based on the weight and water content ratio of the electrode catalyst precursor at the time of introduction and on the weight of the electrode catalyst precursor at the moment. The drying processing step S32 will be completed when the water content ratio of the electrode catalyst precursor inside the container main body 202 has reached a given water content ratio or lower. It is preferred that the given water content ratio be 3 wt%. The value of water content ratio is expressed on wet basis hereunder.

Here, in the case of the present invention, there may also be employed a configuration having no load cells 212. In such case, the change in the weight of the electrode catalyst precursor inside the container main body 202 may be identified in advance by previously performing a preliminary test employing drying conditions (weight of the electrode catalyst precursor to be put into the container main body 202, drying condition) that are identical to those in the drying processing step S32. Then, the change in the weight of the electrode catalyst precursor inside the container main body 202 may be simply identified by, for example, monitoring for example an elapsed time from the start of drying based on the result of the preliminary test.

[Cooling step]

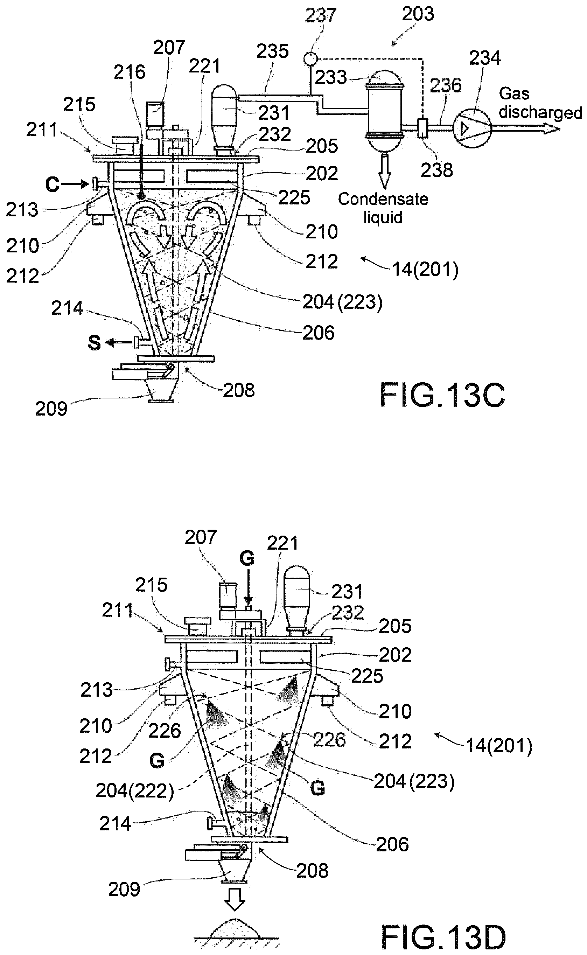

The cooling step S33 is a step for cooling the electrode catalyst precursor that has been dried in the container main body 202, and is executed by the cooling step executor 53. The step is now described with reference to FIG.13C in combination with for example FIG.11; the cooling step executor 53 discharges the steam S inside the jacket 206 from the heating medium discharge outlet 214 via the temperature indicator controller 216. Here, the cooling step executor 53 continues to stir and mix the electrode catalyst precursor by continuing to drive the driving device 207 and the vacuum pump 234 to rotate the stirring blade 204 and to release the gas inside the container main body 202 so as to reduce the pressure therein. The rotation speed of the stirring blade 204 at that time is preferably 40 to 80 rounds per minute; and an operating pressure at the time of reducing the pressure is preferably the atmospheric pressure. Further, the cooling step executor 53 allows the cooling medium C to be injected into the jacket 206 from the heating medium discharge outlet 214 via the temperature indicator controller 216, and cools the container main body 202 with the heat conduction of the cooling medium, thereby allowing the electrode catalyst precursor inside the container main body 202 to be cooled to a given temperature. The temperature of the cooling medium C is preferably 10 to 30°C; the given temperature is preferably a value selected from a range of not higher than 40°C, preferably from a range of 10 to 40°C. The cooling step will be completed when the cooling step executor 53 has detected via the temperature indicator controller 216 that the temperature of the electrode catalyst precursor has reached the given temperature.

[Slow oxidation step]

The slow oxidation step S34 is a step for performing the slow oxidation treatment on the electrode catalyst precursor that has been cooled in the container main body 202, and is executed by the slow oxidation step executor 54. The slow oxidation step executor 54 allows the dried electrode catalyst precursor to be slowly oxidized by discharging the cooling medium C in the jacket 206 from the heating medium injection port 213, stopping the driving device 207 and the vacuum pump 234, and operating the supply valve 215 so as to gradually restore the pressure inside the container main body 202 to a normal pressure. Here, if the gas G for scraping is a high-pressure air, there may be employed a configuration where the slow oxidation step executor 54 injects the high-pressure air into the rotary main shaft 222 from the flow path of the gas G for scraping, and gradually restores the pressure inside the container main body 202 to a normal pressure by ejecting the high-pressure air from each gas ejection hole 226. Further, if an air blow nozzle is provided at a lower portion of the container main body 202, there may be employed a configuration where the slow oxidation step executor 54 gradually restores the pressure inside the container main body 202 to a normal pressure by means of such air blow nozzle. The slow oxidation step will be completed when the slow oxidation treatment of the electrode catalyst precursor in the container main body 202 has been completed.

Here, in the slow oxidation step S34, it is preferred that when gradually restoring the pressure inside the container main body 202 to a normal pressure and then eventually restoring the atmosphere therein to that of a normal-pressure air, a mixed gas prepared by mixing a nitrogen gas and an oxygen gas at an arbitrary ratio with the concentration of the oxygen gas being adjusted, or a mixed gas prepared by mixing a nitrogen gas and air at an arbitrary ratio with the concentration of the oxygen gas being adjusted will be ejected from each gas ejection hole 226 in a manner such that the oxygen gas concentration in the container main body 202 will be increased with time while being controlled to a previously and experimentally obtained numerical range so that the electrode catalyst precursor will not ignite in this step, whereby the oxygen gas concentration therein will eventually be as same as that in the air.

[Retrieving step]

The retrieving step S35 is a step for retrieving the electrode catalyst precursor that has been cooled in the container main body 202, and is executed by the retrieving step executor 55. The step is now described with reference to FIG.13D in combination with for example FIG.11; the retrieving step executor 55 operates and opens the retrieving valve 209 so as to allow the electrode catalyst precursor in the container main body 202 to be taken out from the opening 208. As for the stirring treatment device 201, since the container main body 202 has a simple inner structure, the amount of the residual powder of the electrode catalyst precursor can be reduced at the time of the retrieving step S35. Further, at that time, the retrieving step executor 55 carries out a scraping step where the gas G is to be injected into the rotary main shaft 222 from the flow path of the gas G for scraping and then ejected downward from each gas ejection hole 226, thereby downwardly blowing off the electrode catalyst precursor adhering to the inner wall of the container main body 202 and the stirring blade 204, thus improving a retrieval rate of the electrode catalyst precursor. The retrieving step will be completed when all the electrode catalyst precursor in the container main body 202 has been taken out.

<Electrode catalyst>

There are no particular restrictions on the structure of the electrode catalyst produced in the present embodiment; it will suffice if the electrode catalyst has a structure where noble metal catalyst particles are supported on an electrically conductive support (e.g. conductive carbon support, conductive metal oxide support). For example, the electrode catalyst may be a so-called Pt catalyst, a so-called Pt alloy catalyst (e.g. PtCo catalyst, PtNi catalyst), and a so-called core-shell catalyst having a core-shell structure.

For example, as for a core-shell catalyst having a composition where palladium is employed as a constituent element for the core part 4, and platinum is employed as a constituent element for the shell part 5, chlorine (Cl) species-containing materials such as chloride salts of platinum (Pt) and chloride salts of palladium (Pd) are used as raw materials in many cases. By means of the electrode catalyst production system and production method of the present embodiment, there can be produced an electrode catalyst having a reduced content of these chlorine (Cl) species.

One example of the structure of an electrode catalyst is described in greater detail with reference to the drawings; as shown in FIG.14, the electrode catalyst 1 having a core-shell structure includes the support 2 and a catalyst particle 3 supported on the support 2. The catalyst particle 3 has the core part 4 and the shell part 5 formed to coat at least part of the core part 4. The catalyst particle 3 has a so-called core-shell structure including the core part 4 and the shell part 5 formed on the core part 4.

That is, the electrode catalyst 1 has the catalyst particle 3 supported on the support 2; this catalyst particle 3 has a structure where the core part 4 serves as a core (core), and the shell part 5 serves as a shell coating the surface of the core part 4. Further, the constituent element (chemical composition) of the core part 4 and the constituent element (chemical composition) of the shell part 5 differ from each other in composition.

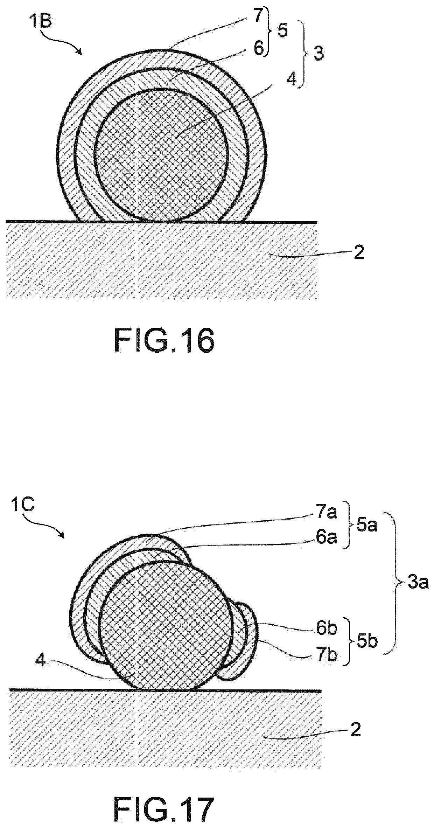

A specific example of a core-shell structure is further shown hereunder; in FIG.15, an electrode catalyst 1A has a catalyst particle 3a comprised of the core part 4, a shell part 5a coating one part of the surface of the core part 4, and a shell part 5b coating another part of the surface of the core part 4. Further, in FIG. 16, an electrode catalyst 1B has a catalyst particle 3 comprised of the core part 4 and a shell part 5 substantially coating the entire surface of the core part 4, where the shell part 5 has a two-layer structure including a first shell part 6 and a second shell part 7. Furthermore, in FIG.17, an electrode catalyst 1C has a catalyst particle 3a comprised of the core part 4, a shell part 5a coating one part of the surface of the core part 4, and a shell part 5b coating another part of the surface of the core part 4, where the shell part 5a has a two-layer structure including a first shell part 6a and a second shell part 7a, and where the shell part 5b has a two-layer structure including a first shell part 6b and a second shell part 7b.

In the present embodiment, chlorine (Cl) species refer to chemical species containing chlorine as a constituent component element. Specifically, chlorine-containing chemical species may include chlorine atoms (Cl), chlorine molecules ($Cl_2$), chloride ions ($Cl^-$), chorine radicals (Cl), polyatomic chlorine ions, and chlorine compounds (e.g. X-Cl where X is a counterion).

In the present embodiment, bromine (Br) species refer to chemical species containing bromine as a constituent component element. Specifically, bromine-containing chemical species may include bromine atoms (Br), bromine molecules ($Br_2$), bromide ions ($Br^-$), bromine radicals (Br·), polyatomic bromine ions, and bromine compounds (e.g. X-Br where X is a counterion).

<Production method of electrode catalyst>

As shown in FIG.18, the electrode catalyst production method of the present embodiment includes an electrode catalyst precursor producing step S1 for producing an electrode catalyst precursor as a raw material of an electrode catalyst; a washing step S2 for washing, via filter press, the liquid 30 containing the electrode catalyst precursor produced in the electrode catalyst precursor producing step S1; and a drying step S3 for drying the electrode catalyst precursor that has been washed in the washing step S2, by means of the stirring treatment device 201 equipped with the stirring blade 204 having the spiral ribbon impeller 223. The steps S1, S2 and S3 can be respectively performed by the electrode catalyst precursor production device 12, the filter press as the washing device 13, and the stirring treatment device 201 as the drying device 14, in the electrode catalyst production system 10.

As shown in FIG.19, the washing step S2 includes the plate closing step S21, the injection step S22, the normal washing step S23, the reverse washing step S24, the plate opening step S25, the cake peeling step S26, and the filter cloth washing step S27. In the washing step S2, by washing, filtrating and dewatering the liquid 30 containing the electrode catalyst precursor produced in the electrode catalyst precursor producing step S1, there can be obtained a washed electrode catalyst precursor 41. Further, the compression step may be performed after the normal washing step S23 and/or after the reverse washing step S24. The configurations of the steps S21 to S27 as well as the compression step are described as above in (Washing device) under <Electrode catalyst production system>.

As shown in FIG.20, the drying step S3 includes the introduction step S31, the drying processing step S32, the cooling step S33, the slow oxidation step S34, and the retrieving step S35. In the drying step S3, by drying the electrode catalyst precursor that has been washed in the washing step S2, a dried electrode catalyst 1 can be obtained. The configurations of the steps S31 to S35 are described as above in (Drying device) under <Electrode catalyst production system>.

Working examples listed below are to exemplify the embodiment of the present invention, and shall not be construed as limiting the scope of the present invention.

<Production of electrode catalyst precursor (reaction step, electrode catalyst precursor producing step)>

(Production example 1)

[Preparation of electrode catalyst precursor-containing liquid (stock liquid)]

As an electrode catalyst, there was used a Pt particle-supported carbon catalyst (referred to as "Pt/C catalyst" hereunder; produced by N.E. CHEMCAT CORPORATION; Pt carrying rate 50 wt%; product name: "SA50BK"). A liquid containing a precursor thereof was at first prepared.

As a support of this precursor, there was used a commercially available conductive hollow carbon support {produced by Lion Corporation; product name "CARBON ECP" (registered trademark) (Ketjenblack EC300J); specific surface area 750 to 800 $m^2/g$}.

This support and a water-soluble Pt salt were then dispersed in water. Next, a water-soluble reductant was added to the dispersion liquid containing the support and the water-soluble Pt salt so as to allow a reduction reaction of the Pt component to progress at a given temperature. In this way, the electrode catalyst precursor-containing liquid used in the present embodiment was prepared.

The liquid containing the electrode catalyst precursor obtained as above was dispersed in a kettle without being dried, and was used as a stock liquid to be treated by the washing device.

<Production of electrode catalyst>

(Working example 1)

[Treatment by washing device (washing step)]

The liquid containing the electrode catalyst precursor obtained in the production example 1 was introduced into the washing device so as to perform the washing treatment. Table 1 shows a treatment time(s) of each step with regard to the washing device. At first, the injection step was performed for 20 min. The thickness of the electrode catalyst precursor-containing cake in the injection step was set to 5 to 10 mm.

Such thickness of the cake is within a thickness range previously determined by a preliminary experiment in view of the washing degree and washing time that are required for the electrode catalyst precursor used.

Next, the normal washing step was performed. In the normal washing step, treatment was at first performed with a washing water of a normal temperature (23°C) for 24 min; the washing water was then switched to a heated water (70°C) at the moment when the electric conductivity $\rho$ of the filtrate had reached 40 $\mu$S/cm or lower; and treatment was then performed with such heated water for another 50 min. After the normal washing step, the compression step was performed for 5 min. Next, the reverse washing step was performed; in the reverse washing step, treatment was performed with a heated washing water (70°C) for 73 min. The washing treatment was performed for about 2.9 hours in total.

An ion-exchange water was used as the washing water. The ion-exchange water used exhibited an electric conductivity $\rho_i$ of 7.70 $\mu$S/cm when at a normal temperature (23°C), and an electric conductivity $\rho_i$ of 4.6 $\mu$S/cm when heated (70°C).

[Treatment by drying device (drying step)]

The electrode catalyst precursor-containing cake obtained after the treatment by the washing device was introduced into the stirring treatment device 201 as the drying device to perform the drying step S3.

Here, in this first embodiment, since the electrode catalyst precursor-containing cake is to be dried with the stirring treatment device 201 having a stirring mechanism, there is no need to crush the electrode catalyst precursor-containing cake as is performed in a later-described comparative example 1 (coarsely crushing the cake before introducing it into a vacuum shelf dryer). That is, a coarse crushing step in the later-described comparative example 1 is unnecessary.

Table 2 shows a treatment time(s) of each step with regard to the stirring treatment device 201.

The capacity of the stirring treatment device 201 was selected based on a powder surface height in the container main body 202 of the stirring treatment device 201 when putting 52 kg of the cake thereinto in the introduction step S31; there was employed a stirring treatment device 201 whose container main body 202 had an effective capacity of 100 L, and whose spiral ribbon impeller 223 was a single ribbon blade.

At first, in the introduction step S31, cake placement was carried out by putting 52 kg of a cake with a water content ratio of about 82% into the container main body 202.

Next, the drying processing step S32, the cooling step S33 and the slow oxidation step S34 were performed sequentially before retrieving the cake in the retrieving step S35; there was measured a time required to obtain an electrode catalyst having a water content ratio of not higher than 3 wt%.

Further, in order to verify whether a "friction" associated with stirring drying would impact the product, a stirring test was performed on the electrode catalyst precursor in the cooling step S33 of the production example 1, where while the stirring blade 204 was being rotated, the electrode catalyst precursor was being cooled by the cooling medium C injected into the jacket 206 from the heating medium discharge outlet 214.

(Comparative example 1)

[Treatment by washing device (washing step)]

The liquid containing the electrode catalyst precursor obtained in the production example 1 was introduced into the washing device so as to perform the washing treatment. Table 1 shows a treatment time(s) of each step with regard to the washing device. At first, the injection step was performed for 40 min. The thickness of the electrode catalyst precursor-containing cake in the injection step was set to 11 to 15 mm.

Such thickness of the cake is out of a thickness range previously determined by a preliminary experiment in view of the washing degree and washing time that are required for the electrode catalyst precursor used.

Next, the normal washing step was performed. In the normal washing step, treatment was at first performed with a washing water of a normal temperature (23°C) for 33 min; the washing water was then switched to a heated water (70°C) at the moment when the electric conductivity $\rho$ of the filtrate had reached 40 $\mu$S/cm or lower; and treatment was then performed with such heated water for another 60 min. After the normal washing step, the compression step was performed for 5 min, and the reverse washing step was performed subsequently. However, since the conductivity $\rho$ of the filtrate did not change from the electric conductivity $\rho$ of the filtrate that was observed at the time when the normal washing step was finished, the treatment was then stopped after performing the reverse washing step for 36 min i.e. after performing the washing treatment for about 2.9 hours in total.

An ion-exchange water was used as the washing water. The ion-exchange water used exhibited an electric conductivity $\rho_i$ of 7.70 $\mu$S/cm when at a normal temperature (23°C), and an electric conductivity $\rho_i$ of 4.6 $\mu$S/cm when heated (70°C).

[Treatment by drying device (drying step)]

The electrode catalyst precursor-containing cake obtained after the treatment by the washing device was subjected to a drying step, using a dedicated crusher, vacuum shelf dryer and hammer mill.

At first, in a coarse crushing step for crushing the cake with a dedicated crusher, there was obtained 52 kg of an electrode catalyst precursor having a water content ratio of about 80 to 82%.

In this coarse crushing step, the cake is removed from the washing device, and the electrode catalyst precursor-containing cake is then crushed (coarsely crushing the cake before introducing it into a vacuum shelf dryer). Unlike the stirring treatment device 201 of the first embodiment, since the vacuum shelf dryer used in the comparative example 1 does not have a stirring mechanism, the cake before being introduced into the vacuum shelf dryer has to be coarsely crushed with the crusher, and the crushed products of the cake have to be substantially evenly allocated and placed on the shelves.

In a subsequent introduction step, this electrode catalyst precursor was subjected to cake serving where it was allocated in 20 cooking trays each having a width of 600 mm, a length of 780 mm and a height of 20 mm, followed by placing the cooking trays carrying the electrode catalyst precursor into the vacuum shelf dryer, and then closing the door thereof so as to perform a drying processing step for drying the electrode catalyst precursor under a reduced pressure, and then a cooling step for cooling the same under a reduced pressure as well.

After the cooling step was over, a slow oxidation step was performed by slowly opening the door; in a subsequent retrieving step, the cooking trays were removed from the vacuum shelf dryer to take out the electrode catalyst precursor.

Next, there was performed a crushing step for crushing the electrode catalyst precursor taken out with a hammer mill, and measured was a time required to obtain an electrode catalyst having a water content ratio of not higher than 3 wt%.

Unlike the stirring treatment device 201 of the first embodiment, since the vacuum shelf dryer used in the comparative example 1 does not have a stirring mechanism, the block of the electrode catalyst precursor powder has to be crushed with a hammer mill. Further, there occurs a need to remove the block of the electrode catalyst precursor powder from the vacuum shelf dryer before performing crushing with the hammer mill.

[Table 1]

| | Injection step | Normal washing step | | | Compression step | Reverse washing step | | | Total washing time | Thickness of cake (mm) |
|---|---|---|---|---|---|---|---|---|---|---|
| | | Normal temperature water (23°C) | Heated water (70°C) | Electric conductivity of filtrate (μS/cm) | | Normal temperature water (23°C) | Heated water (70°C) | Electric conductivity of filtrate (μS/cm) | | |
| Working example 1 | 20min | 24min | 50min | 15.9 | 5min | — | 73min | 9.7 | 2.9 hours | 5 to 10 |
| Comparative example 1 | 40min | 33min | 60min | 19.3 | 5min | — | Stopped after 36 min | 19.3 | Stopped after 2.9 hours | 11 to 15 |

<Evaluation results>

As shown in Table 1, in the working example 1, while the electric conductivity ρ of the filtrate at the time when the normal washing step was finished was 15.9 μS/cm, the electric conductivity ρ of the filtrate at the time when the reverse washing step was finished had dropped to 9.7 μS/cm. The electric conductivity ρ of the filtrate was able to be reduced to 10 μS/cm or lower in a washing treatment time of less than 3 hours. In contrast, in the comparative example 1, while the electric conductivity ρ of the filtrate at the time when the normal washing step was finished had dropped to 19.3 μS/cm, the conductivity did not decrease at all from 19.3 μS/cm thereafter even by performing the reverse washing step.

[Table 2]

| | Coarse crushing step | Introduction step | Drying processing step | Cooling step | Slow oxidation step | Retrieving step | Crushing step | Total drying time |
|---|---|---|---|---|---|---|---|---|
| Working example 1 | Unnecessary | 0.4 hours | 3.1 hours | | 4 hours | | Unnecessary | 7.5 hours |
| Comparative example 1 | 4 hours | 2 hours | 24 hours | | 4 hours | | 8 hours | 42 hours |

<Evaluation results>

As shown in Table 2, in the working example 1, since the electrode catalyst precursor does not have to be allocated, but is only to be put into the container main body 202 in the introduction step S31, the time spent in the introduction step was able to be reduced to 0.4 hours whereas 2 hours were required in the comparative example 1.

Further, in the working example 1, in both the drying processing step S32 and the cooling step S33, due to the high mixing capability and the heat conduction from the jacket 206, an improved drying speed was observed as compared to the vacuum shelf dryer, where the time spent in the drying and cooling steps was able to be reduced to 3.1 hours whereas 24 hours were required in the comparative example 1.

Here, the electrode catalyst obtained was fairly comparable to that of the comparative example 1; it was confirmed that the "friction" associated with stirring drying would barely affect the quality of the product. Further, in the working example 1, in both the slow oxidation step S34 and the retrieving step S35, although there was confirmed no reduction in the time spent in these steps as compared to the comparative example 1, the coarse crushing step and the crushing step were able to be omitted in the working example 1.

(Comparative example 2)

[Treatment by washing device (washing step)]

The liquid containing the electrode catalyst precursor obtained in the production example 1 was introduced into a centrifugal separator so as to be subjected to a washing treatment. Washing was repeated until the electric conductivity ρ of the filtrate had reached 10 $\mu$S/cm or lower when measured by JIS-standard testing method (JIS K0522). A dispersion liquid was then prepared by dispersing the electrode catalyst precursor obtained into an ultrapure water, followed by filtrating such dispersion liquid. The residue obtained by filtration was then treated with the drying device at a temperature of 70°C in the air for 24 hours so as to be dried, thereby obtaining the electrode catalyst. Table 3 shows and compares the treatment times of the treatments by the washing devices (washing steps) in the working example 1 and the comparative example 2. Here, in Table 2, there are separately shown a treatment time from raw material feed to solid-liquid separation; and a time required for cake washing and dewatering.

[Table 3]

|  | Raw material feed to solid-liquid separation | Cake washing, dewatering | Total |
|---|---|---|---|
| Working example 1 | 0.33 hours | 2.9 hours | 3.3 hours |
| Comparative example 2 | About 1 hour | 15 to 19 hours | 16 to 20 hours |

<Evaluation results>

Further, in the comparative example 2 where a centrifugal separator was used to perform washing as is the conventional case, 15 to 19 hours were required in order for the electric conductivity $\rho$ of the filtrate to be reduced to 10 $\mu$S/cm or lower, as a result of conducting the comparative example three times.

Thus, as can be understood by comparing the working example 1 with the comparative examples 1 and 2, in the case of the electrode catalyst production system and production method of the present embodiment, the time required for the treatment (washing step) by the washing device can be drastically reduced to 1/5 or shorter as compared to the conventional treatment using a centrifugal separator. Further, as for the washing device of the present embodiment, since the electrode catalyst precursor-containing cake is to be automatically peeled, there can be omitted the operation for an operator to scratch off the electrode catalyst precursor, thereby making it possible to also drastically save effort.

Further, as can be understood by comparing the working example 1 with the comparative example 1, in the case of the electrode catalyst production system and production method of the present embodiment, the time required for the treatment by the drying device 14 (drying step S3) can be drastically reduced to about 1/5 to about 1/6. Furthermore, since the stirring treatment device 201 as the drying device 14 of the present embodiment is capable of automatically performing all the drying processing step S32, the cooling step S33, the slow oxidation step S34 and the retrieving step S35, efforts can also be drastically saved, whereby it is possible to provide an electrode catalyst production method and production system requiring the fewest possible manual operations.

[Second embodiment]

<Electrode catalyst production system>

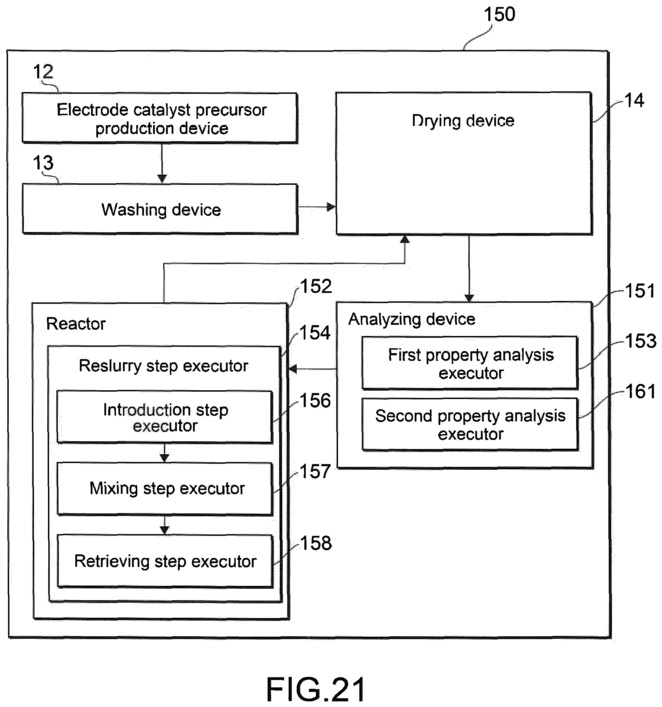

FIG.21 is a block diagram showing an outline of an electrode catalyst production system of a second embodiment. In addition to the electrode catalyst precursor production device 12, the washing device 13 and the drying device 14 that have been described in the first embodiment, an electrode catalyst production system 150 further has an analyzing device 151 for analyzing the properties of the dried electrode catalyst 1 and a WET product after the catalyst cake preparation, and a reactor 152 for mixing an ion-exchange water into the dried electrode catalyst 1 so as to reslurry the same.

Conventionally, in a packing operation at the time of shipping a powdery electrode catalyst, and in a weighing operation performed by a customer at the time of using the electrode catalyst, concerns on ignition and disappearance of the powdery catalyst have become a problem; as a countermeasure for such ignition and disappearance of the electrode catalyst, and in terms of future packing and delivery condition, it is conceivable that the electrode catalyst shall be supplied in the form of a WET product where the powder of the electrode catalyst has been wetted with a pure water, and it is anticipated that this demand will increase in the years to come. However, when, for example, a weight ratio between the electrode catalyst and water is 1:4, the WET product will not be solid, but liquid. Electrode catalysts are expensive and thus need to be collected as much as possible; the WET product would dry while adhering to a device or a container containing the electrode catalyst, and would thus adhere to the inner wall of the container. Further, there has also been proposed a method where a WET product is to be taken out in the drying processing step S32 of the first embodiment after being adjusted to that having a desired weight ratio of electrode catalyst : water. However, in such case, the WET product shall be a WET product that has not undergone the slow oxidation step S34, which leads to a concern that an oxidation state on the catalyst particle surface of the electrode catalyst will not be a satisfactorily stable state in the atmosphere, and eventually to a concern that the product will be an electrode catalyst exhibiting different initial activities with regard to a hydrogen oxidation reaction and an oxygen reduction reaction. Further, in such case, since the washing step S2 is only to wash and filtrate the electrode catalyst precursor, there may be observed a lack of uniformity in water content of the WET product. For these reasons, supply in the form of a WET product has incurred difficulties in handling property and recovery property on both the manufacturer side and the customer side to which the product is supplied.

Here, in the present embodiment, the washed electrode catalyst precursor is to be dried so that the oxidation state on the catalyst particle surface of the electrode catalyst will be a satisfactorily stable state in the atmosphere. Further, an ion-exchange water is to be mixed with the dried electrode catalyst 1, followed by equalizing the water content of the electrode catalyst-containing slurry, and then keeping performing drying before reaching a level at which a solid (pellet-shaped, cake-shaped) product can be obtained. In this way, since there are prepared multiple solid catalyst cakes with the water content of the WET product being adjusted to that of a target numerical range, and since they are supplied in the form of a WET product having a desired weight ratio, the concerns of ignition and disappearance of the powdery catalyst can be reliably avoided, and the aforementioned handling property and recovery property on both the manufacturer side and the customer side to which the product is supplied can be improved. In addition, as for a solid catalyst cake, during a synthesis process of the catalyst, the surface of its catalyst support shall be susceptible to various chemical actions caused by each reagent used in synthesis, and by products, by-products and impurities that are generated in each synthesis reaction. As a result, the type, total amount and abundance per unit area of the surface functional group(s) of the catalyst support may vary. Therefore, an affinity (wettability) of the catalyst to water will change depending on the type of the catalyst (type of support) and the type of each synthesis reaction process employed. Thus, a water content ratio (range of water content ratio) with which the electrode catalyst can be turned into a solid superior in handling property and recovery property is previously and experimentally calculated per each catalyst.

(Analyzing device)

The analyzing device 151 is to analyze the properties of the electrode catalyst 1 obtained through the drying step S3 of the first embodiment. The analyzing device 151 includes a first property analysis executor 153 for executing a first property analysis step S36 for analyzing the properties of the electrode catalyst 1 retrieved in the retrieving step S35 of the first embodiment. In the first property analysis step S36, it is preferred that there are analyzed at least the catalyst supporting amount, water content ratio (wt%) and catalyst particle size of the electrode catalyst 1. Here, in the present embodiment, while there is employed a method where part of the powder of the electrode catalyst 1 retrieved in the retrieving step S35 is taken out and then subjected to property analysis using the analyzing device 151, there may also be employed other analysis methods.

(Reactor)

The reactor 152 is to reslurry the electrode catalyst 1 dried by the drying device 14, after the first property analysis step S36. In the present embodiment, the reactor 152 is used to reslurry the electrode catalyst 1; while one more equipment is thus required, the electrode catalyst 1 can be reslurried more quickly and reliably. The reactor 152 includes a reslurry step executor 154 for executing a reslurry step S40 for reslurrying the electrode catalyst 1 retrieved in the retrieving step S35. As a method for performing reslurry in the reslurry step S40, there may be employed a reslurry method using a stirring device-equipped reactor such as a stirrer-equipped kettle.

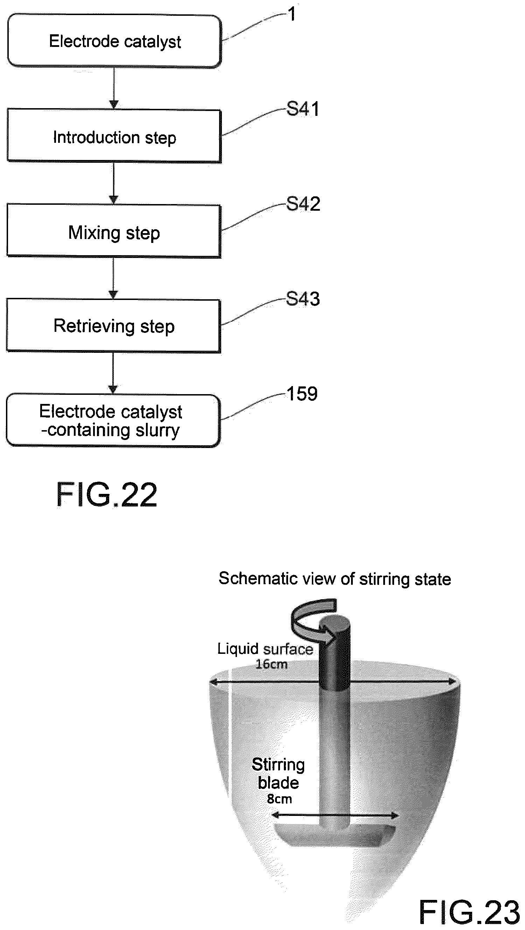

As shown in the block diagram of FIG.21 and the flow chart of FIG.22, the reslurry step executor 154 includes an introduction step executor 156, a mixing step executor 157 and a retrieving step executor 158 as executors for respectively executing an introduction step S41, a mixing step S42 and a retrieving step S43. In the present embodiment, in order to maintain a stable oxidation state on the catalyst particle surface of the electrode catalyst used in the atmosphere, the steps S41 to S43 are performed at a normal temperature, under the atmospheric pressure and in the atmosphere, without employing a particular gas atmosphere such as a nitrogen atmosphere. The steps S41 to S43 are described hereunder.

[Introduction step]

The introduction step S41 is a step for introducing the electrode catalyst 1 dried by the drying device 14 and an ion-exchange water for mixing into the reactor 152, and is executed by the introduction step executor 156. As for a method for introducing the electrode catalyst 1 and the ion-exchange water, as is the case with the introduction step S31, they may be introduced by a manual operation using a funnel or the like, or a tube or conveyor belt or the like transporting the electrode catalyst 1 and the ion-exchange water may be installed in the reactor 152 so that they may be directly introduced thereinto without manual intervention.

A pure water can be used as the ion-exchange water, and it is preferred that an "ultrapure water" be used. An "ultrapure water" is a water having a specific resistance R of not smaller than 3.0 MΩ·cm, where the specific resistance R (reciprocal of electric conductivity measured by JIS-standard testing method (JIS K0552)) is expressed by a formula:...

$$R=1/\rho\ldots(1).$$

Here, in the formula (1), R represents a specific resistance, $\rho$ represents an electric conductivity measured by the JIS-standard testing method (JIS K0552). Further, although it is preferred that the "ultrapure water" have a water quality equivalent to or cleaner than that of "A3" prescribed in JIS K0557 "Water used for industrial water and wastewater analysis," there are no particular restrictions so long as the water has an electric conductivity satisfying the correlation expressed by the formula (1); for example, as such "ultrapure water," there may also be used an ultrapure water produced by an ultrapure water production device of the "Milli Q series" (by Merck KGaA) or the "Elix UV series" (by Nihon Millipore K.K). Here, as for the ion-exchange water, it does not necessarily have to be a pure water; for example, there may also be used an ion-exchange water having a pH of 6 to 8, and an electric conductivity $\rho_i$ of lower than 10 $\mu$S/cm when measured by the JIS-standard testing method (JIS K0522).

As for a weight ratio between the electrode catalyst 1 and the ion-exchange water that are to be introduced in the introduction step S41, it is preferred that the weight ratio be a ratio at which the mixture of the electrode catalyst 1 and the ion-exchange water will become a liquid slurry; for example, depending on the catalytic species, an experimentally optimum ratio may be determined from a range of 1:2 to 1:3.5 in terms of weight ratio of electrode catalyst : ion-exchange water. In the present embodiment, the amount of the ion-exchange water introduced is calculated and determined based on the analyzed results of, for example, the catalyst supporting amount and water content ratio of the electrode catalyst 1 that has been subjected to the property analysis in the property analysis step, and based on the amount of the electrode catalyst 1 introduced. Here, the amount of the electrode catalyst 1 introduced may be measured by a manual operation; or by measuring the weight of the electrode catalyst 1 at the time of starting and finishing the retrieving step S35 of the first embodiment with the aid of the load cells 212, 212, and then calculating the amount of the electrode catalyst 1 based on the measured results.

[Mixing step]

The mixing step S42 is a step for mixing the electrode catalyst 1 and the ion-exchange water that have been introduced inside the reactor 152, and is executed by the mixing step executor 157. The mixing step executor 157 drives the stirring device of the reactor 152 so as to stir and mix the electrode catalyst 1 and the ion-exchange water under a normal temperature and the atmospheric pressure. In the present embodiment, since there is employed a ratio at which the mixture of the electrode catalyst 1 and the ion-exchange water will become a liquid slurry, there exists no concern that the electrode catalyst 1 will ignite and disappear while being mixed even under the atmospheric pressure, and the mixture can be stirred and mixed more evenly. The mixing step S42 will be completed when an electrode catalyst-containing slurry 159 has been prepared as a result of uniformly mixing the electrode catalyst 1 and the ion-exchange water. Here, a drive time and a rotation number of the stirring device are not described in detail as they may vary depending on for example the capacity and type of the reactor 152, and the amounts of the electrode catalyst 1 and the ion-exchange water that have been introduced.

[Retrieving step]

The retrieving step S43 is a step for retrieving the electrode catalyst-containing slurry 159 that has been prepared in the reactor 152, and is executed by the retrieving step executor 158. Next, the retrieved electrode catalyst-containing slurry 159 will again be introduced into the drying device 14. Thus, if the introduction into the drying device 14 is performed by a manual operation, the electrode catalyst-containing slurry 159 may be retrieved and then temporarily put into another container or the like. Further, if the slurry is to be directly introduced into the drying device 14 without manual intervention, a tube or the like may be connected to the drying device 14 so that the electrode catalyst-containing slurry 159 can be transported from the reactor 152 to the drying device 14 through such tube or the like. The retrieving step S43 will be completed when all the electrode catalyst-containing slurry 159 in the reactor 152 has been taken out. Here, the retrieving step executor 158 is not described in detail as it may vary depending on for example the type of the reactor 152.

(Drying device)

The drying device 14 is to dry the electrode catalyst-containing slurry 159 prepared by reslurry in the reslurry step S40, using the stirring treatment device 201 equipped with the stirring blade 204; and to produce multiple solid catalyst cakes. The drying device 14 used in this step may be the drying device 14 used in the drying step S3 of the first embodiment, or another drying device 14. The description of the structure of the stirring treatment device 201 as the drying device is omitted as the structure thereof is similar to that of the first embodiment.

A catalyst cake preparation step S50 for preparing a solid catalyst cake includes, as is the case with the drying step S3 of the first embodiment, an introduction step S31', a drying processing step S32', a cooling step S33', a slow oxidation step S34' for performing a slow oxidation treatment on a cooled WET product, and a retrieving step S35' for retrieving the WET product that has been subjected to the slow oxidation treatment. The operating conditions for the steps S31' to S35' are similar to those of the steps S31 to S35 in the drying step S3 of the first embodiment; the main functions of the steps S31' to S35' are thus similar to those of the steps S31 to S35 in the drying step S3 of the first embodiment.

In the drying processing step S32', vapors and gases will evaporate from the slurry 159 in the container main body 202, thereby causing the weight of the slurry 159 to change. The weight of the slurry 159 in the container main body 202 at that time is measured by the load cells 212, 212; the water content ratio of the slurry 159 at the moment is calculated based on the weight of the slurry 159 at the time of introduction, the weight ratio between the electrode catalyst 1 and the ion-exchange water that has been determined in the introduction step S41, and the weight of the slurry 159 at the moment. The drying processing step S32' will be completed when the slurry 159 in the container main body 202 has turned into a solid (pellet-shaped, cake-shaped) WET product by exhibiting a water content ratio equal to or lower than a given water content ratio. In this way, by drying the slurry 159 with a uniform water content so as to prepare the WET product of a catalyst cake, the water content of such WET product can be made uniform. Here, it is preferred that the given water content ratio be lower than 80 wt% whereby the WET product will not adhere to the container main body 202 and the stirring blade 204.

In the slow oxidation step S34', as is the case with the drying step S3, the WET product of the catalyst cake is to be slowly oxidized by discharging the cooling medium C in the jacket 206 from the heating medium injection port 213, stopping the driving device 207 and the vacuum pump 234, and operating the supply valve 215 so as to gradually restore the pressure inside the container main body 202 to a normal pressure. Thus, as compared to a conventional box-shaped vacuum shelf dryer, an operation time can be drastically reduced, and automation is possible. Further, since the slow oxidation step S34' can also be automated, the slow oxidation step can be performed more reliably. The slow oxidation step will be completed when the slow oxidation treatment of the WET product of the catalyst cake in the container main body 202 has been completed.

(Analyzing device)

The analyzing device 151 is to analyze the properties of the WET product obtained through the catalyst cake preparation step S50. The analyzing device 151 includes a second property analysis executor 161 for executing a second property analysis step S60 for analyzing the properties of the WET product that has been retrieved in the retrieving step S35'. In this second property analysis step S60, it is preferred that at least the water content ratio (wt%) of the WET product be analyzed. Here, in the present embodiment, while there is employed a method where part of the WET product retrieved in the retrieving step S35' is taken out and then subjected to property analysis using the analyzing device 151, there may also be employed other analysis methods.

[First receiving step]

A first receiving step is to receive the WET product of the catalyst cake that has been retrieved in the retrieving step S35' into a container or a bag. The receiving container or bag used in the first receiving step is made of plastic, and has the inner side thereof coated with an antistatic agent. After executing the second property analysis step, the WET product retrieved in the retrieving step S35' will be received into such plastic packaging container or packaging bag. This first receiving step is performed in the atmosphere, and the WET product is to be received into the packaging container or packaging bag while being acclimated to the atmosphere. As for the execution of this step, the plastic packaging container or packaging bag may be previously disposed in a lower region of the opening 208 in the retrieving step S35' so that the WET product dropped from the container main body 202 can then be directly received into this packaging container or packaging bag; or the WET product may be taken out once in the retrieving step S35' before being received into the plastic packaging container or packaging bag.

Next, the plastic packaging container or packaging bag containing the WET product of the catalyst cake is further to be received in another container. The container used at that time is a stainless-steel UN can (container carrying the "UN inspection certificate (UN mark)" as a result of passing the container performance test conducted by the NIPPON HAKUYOHIN KENTEI KYOKAI in accordance with the international standards: dangerous goods transporting container), and has the inner side thereof coated with an antistatic agent. It is preferred that this UN can be made of SUS316, and belong to packing group II or III capable of receiving materials classified as UN No:3178, Name and description: FLAMMABLE SOLID, INORGANIC, N.O.S., UN class: 4.1. After completing a second receiving step, this UN can will be transported and provided to the customer.

[Second receiving step]

In the second receiving step, as another mode, the aforementioned UN can is used instead of the plastic packaging container or packaging bag used in the first receiving step. In such case, the UN can used shall be configured to be able to receive the WET product in a sealed manner.

(Working example 2)

[Treatment by reactor (reslurry step)]

The reslurry step S40 was performed by introducing the powder of the electrode catalyst 1 obtained after the treatment by the drying device into a dropping funnel that was used to resemble the reactor 152.

The capacity of the dropping funnel was selected based on a liquid surface height in the reactor 152 at the time of introducing 100 g of the powder of the electrode catalyst 1 and 400 ml of the ion-exchange water in the introduction step S41; there was employed a dropping funnel having an effective capacity of 2L, in which the diameter of the stirring blade of the stirring device was 8 cm as shown in FIG.23. Here, the diameter of the liquid surface when 100 g of the powder of the electrode catalyst 1 and 400 ml of the ion-exchange water had been introduced into this dropping funnel was 16 cm.

At first, in the introduction step S41, 100 g of the powder of the electrode catalyst 1 and 400 ml of the ion-exchange water were introduced into the dropping funnel. Immediately after the introduction, approximately 1/4 of the powder of the electrode catalyst 1 had precipitated on the bottom of the dropping funnel, whereas the rest of the powder of the electrode catalyst 1 had deposited on the liquid surface of the ion-exchange water. As a result of directly leaving them to stand still for 30 min without driving the stirring device, while most of the powder of the electrode catalyst 1 had precipitated in the ion-exchange water, part of the powder of the electrode catalyst 1 were still deposited on the liquid surface of the ion-exchange water by about 2 to 3 cm. Here, the deposited powder of the electrode catalyst 1 was in a wet condition after absorbing the ion-exchange water.

The step was then moved to the mixing step S42 from this condition, where the stirring device was driven to rotate the stirring blade at 60 rpm (60 rounds per minute) so as to stir and mix the electrode catalyst 1 and the ion-exchange water under a normal temperature and the atmospheric pressure. Immediately after starting stirring, the electrode catalyst 1 and the ion-exchange water were confirmed to have not yet been mixed with each other right away. After 30 min, while the electrode catalyst 1 and the ion-exchange water were being stirred in a mixed manner only at a center part of the dropping funnel along the shaft of the rotating stirring blade, the powder of the electrode catalyst 1 maintained its condition as a moist powder as is the condition before moving to the mixing step S42 at an outer circumferential part of the electrode catalyst 1 and the ion-exchange water which was located in the vicinity of the inner wall of the dropping funnel. Then, after 60 min, as for the wetness of the moist powder at the outer circumferential part of the electrode catalyst 1 and the ion-exchange water, while the part where the electrode catalyst 1 and the ion-exchange water had been stirred in a mixed manner had expanded such that the center part and a portion of the outer circumferential part of the electrode catalyst 1 and the ion-exchange water had already started turning into a slurry, the powder of the electrode catalyst 1 in a large portion of the outer circumferential part was still in the form of a wet cake as is the condition before moving to the mixing step S42.

From this condition, 100 ml of the ion-exchange water was further introduced thereinto, and the stirring device was driven to rotate the stirring blade at 60 rpm so as to stir and mix the electrode catalyst 1 and the ion-exchange water under a normal temperature and the atmospheric pressure, with the powder of the electrode catalyst 1 being in an amount of 100 g and the ion-exchange water now being in an amount of 500 ml. After 30 min, while the whole electrode catalyst 1 and ion-exchange water in the dropping funnel had turned into a slurry-like substance, the viscosity thereof was extremely high such that the powder of the electrode catalyst 1 were scattered in spherical shapes. Then, after 60 min, while the powder of the electrode catalyst 1 scattered in spherical shapes had decreased, the powder of the electrode catalyst 1 were scattered in spherical shapes centering around a marginal region of the electrode catalyst 1 and the ion-exchange water which is located in the vicinity of the inner wall of the dropping funnel; the electrode catalyst 1 and the ion-exchange water had not yet turned into a perfect slurry-like substance.

From this condition, the rotation number of the stirring blade was further increased, whereby the stirring device was driven to rotate the stirring blade at 80 rpm with the amount of the powder of the electrode catalyst 1 being 100 g and the amount of the ion-exchange water being 500 ml, and the electrode catalyst 1 and the ion-exchange water were stirred and mixed under a normal temperature and the atmospheric pressure. However, no dramatic changes were observed as compared to when the stirring blade was rotated at 60 rpm, and the powder of the electrode catalyst 1 was again scattered in spherical shapes centering around the marginal region of the electrode catalyst 1 and ion-exchange water; it was impossible to confirm a significant effect owing to the increase in rotation number of the stirring blade for performing stirring. Next, the rotation number of the stirring blade was further increased, whereby the stirring device was driven to rotate the stirring blade at 250 rpm with the amount of the powder of the electrode catalyst 1 being 100 g and the amount of the ion-exchange water being 500 ml, and the electrode catalyst 1 and the ion-exchange water were stirred and mixed under a normal temperature and the atmospheric pressure. As a result, as for the powder of the electrode catalyst 1 scattered in spherical shapes, even those in the marginal region of the electrode catalyst 1 and the ion-exchange water had mostly disappeared, whereby the electrode catalyst 1 and the ion-exchange water had turned into a perfect slurry-like substance.

<Evaluation results>

When the ratio between the powder of the electrode catalyst 1 and the ion-exchange water was 1:4 (powder : ion-exchange water=1:4), it was difficult to uniformly moisturize the whole electrode catalyst 1 and the ion-exchange water so as to turn them into a slurry even by stirring and mixing them.

Further, when the ratio between the powder of the electrode catalyst 1 and the ion-exchange water was 1:5 (powder : ion-exchange water=1:5), it was difficult to turn the electrode catalyst 1 and the ion-exchange water into a slurry when the rotation number of the stirring blade was 60 rpm, and the electrode catalyst 1 and the ion-exchange water failed to be perfectly turned into a slurry even when the rotation number of the stirring blade was 80 rpm. The rotation number of the stirring blade was set to 80 rpm so as to simulate the stirring blade 204 of the stirring treatment device 201; thus, it became clear that it was difficult to execute the reslurry step S40 using the drying device 14, but without using the reactor 152.

When the ratio between the powder of the electrode catalyst 1 and the ion-exchange water was 1:5 (powder : ion-exchange water=1:5), the electrode catalyst 1 and the ion-exchange water were able to be perfectly turned into a slurry when the rotation number of the stirring blade was 250 rpm which was greater than 80 rpm.

(Working example 3)

[Treatment by drying device (drying step)]

The drying step S3 was performed by introducing the electrode catalyst precursor-containing cake obtained after the treatment by the filter press as the washing device into the stirring treatment device 201 as the drying device.

In the introduction step S31, introduced was 4.98 kg of a cake having a water content ratio of 72.1 wt% and an apparent density of 540 $kg/m^3$ (apparent density after tapping was 700 $kg/m^3$). Hereinafter, the water content ratio (moisture ratio) of the cake and the slurry is a value obtained by dividing the weight of the water contained in the cake by a sum of the weight of the catalyst powder contained in the cake and the weight of the water contained therein; the weight of the water is detected in such a manner that a measurement container is to be heated at a temperature of 70°C in the air for 70 min, and an infrared moisture meter is used to measure a change in weight of a water-containing cake placed in such measurement container before and after the measurement.

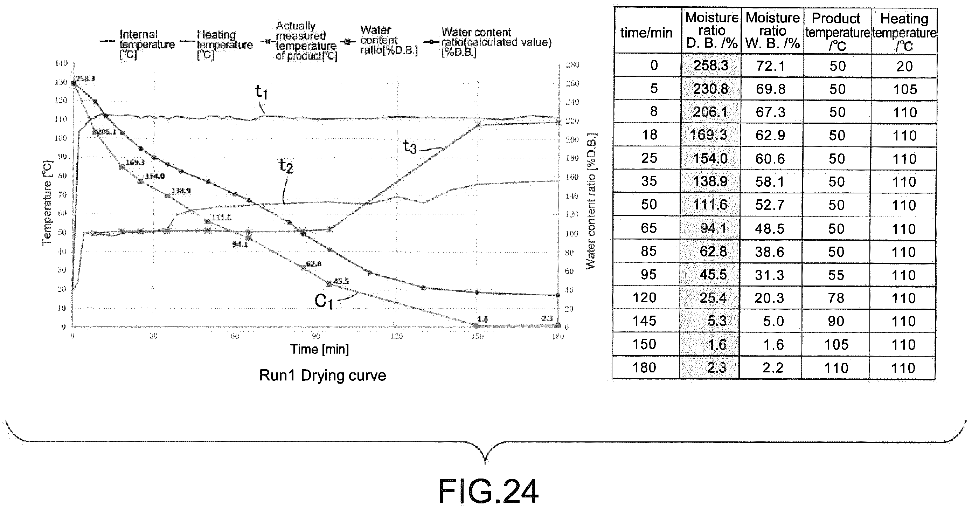

In the drying processing step S32, the vacuum pump 234 was driven to reduce the pressure inside the container main body 202 to 12.3 kPa in terms of gauge pressure, the stirring blade 204 was rotated at a rotation speed of 85 rounds per minute, and the steam S was injected into the jacket 206 from the heating medium injection port 213 so as to adjust a heating temperature $t_1$ of the container main body 202 to 110°C, whereby changes with time in an internal temperature $t_2$ of the container main body 202, in a temperature $t_3$ of the electrode catalyst precursor (actually measured temperature of the product) and in a water content ratio $C_1$ of the cake were measured for 180 min. A graph and table of the measurement results are shown in FIG.24 (Run 1 Drying curve).

In this drying processing step S32 of 180 min, the internal temperature of the container main body 202 rose from 18.8°C to 77.8°C, and the temperature of the electrode catalyst precursor rose from 19.7°C to 108.9°C as well. Next, the cooling step S33 and the slow oxidation step S34 were sequentially performed, and 1.4 kg of a cake having a water content ratio of 2.2 wt% and an apparent density of 450 $kg/m^3$ (apparent density after tapping was 480 $kg/m^3$) was able to be retrieved in the retrieving step S35.

Further, the amount of the electrode catalyst adhering to the inner side of the container main body 202 was 6.8 g, and the amount of the electrode catalyst precursor taken out as a sample for measurement or the like was 46 g. Further, the amount of the condensate liquid retrieved after being condensed by the condenser 233 following the discharge through the bag filter 231 was 3.1 kg.

(Working example 4)

The drying step S3 was performed by introducing the slurry that had been obtained after the treatment by a kettle as the reactor 152 into the stirring treatment device 201 as the drying device, the slurry being prepared by reslurrying the electrode catalyst.

In the introduction step S31, introduced was 11.25 kg of a slurry having a water content ratio of 93.3 wt%. Here, the water content ratio of the slurry is calculated with the water content ratio of the powder of the electrode catalyst being 5 wt%, and also with the weight of the ion-exchange water introduced in the reslurry step S40 being taken into consideration.

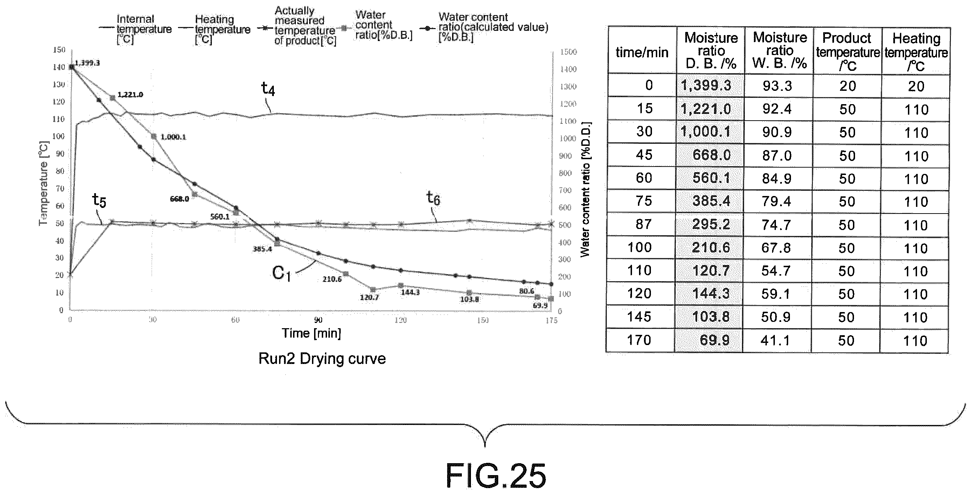

In the drying processing step S32, the vacuum pump 234 was driven to reduce the pressure inside the container main body 202 to 12.3 kPa in terms of gauge pressure, the stirring blade 204 was rotated at a rotation speed of 85 rounds per minute, and the steam S was injected into the jacket 206 from the heating medium injection port 213 so as to adjust a heating temperature $t_4$ of the container main body 202 to 110°C, whereby changes with time in an internal temperature $t_5$ of the container main body 202, in a temperature $t_6$ of the electrode catalyst precursor (actually measured temperature of the product) and in a water content ratio $C_2$ of the cake were measured for 170 min. A graph and table of the measurement results are shown in FIG.25 (Run 2 Drying curve).

In this drying processing step S32 of 170 min, the internal temperature $t_5$ of the container main body 202 rose from about 20°C to about 50°C, and the temperature $t_6$ of the electrode catalyst precursor rose from 20.2°C to 52.5°C as well. Next, the cooling step S33 and the slow oxidation step S34 were sequentially performed, and 1.1 kg of a cake having a water content ratio of 41.1 wt% and an apparent density of 840 kg/$m^3$ (apparent density after tapping was 900 kg/$m^3$) was able to be retrieved in the retrieving step S35.

Further, the amount of the electrode catalyst adhering to the inner side of the container main body 202 was 317 g, and the amount of the electrode catalyst precursor taken out as a sample for measurement or the like was 45 g. Further, the amount of the condensate liquid retrieved after being condensed by the condenser 233 following the discharge through the bag filter 231 was 9.3 kg.

<Evaluation results>

[Production of electrode catalyst]

(1) Process where an electrode catalyst precursor is produced with a kettle in the electrode catalyst precursor producing step S1, an electrode catalyst precursor having a water content ratio of 60 to 80 wt% is then obtained by performing filtration, washing and dewatering via filter press in the washing step S2, this electrode catalyst precursor is then dried and coarsely crushed by the stirring treatment device 201 in the drying step S3 to obtain an electrode catalyst having a water content ratio of 1 to 5 wt%, and this electrode catalyst is then crushed by a crusher to obtain an electrode catalyst powder.

In this process, after introducing into the stirring treatment device 201 a moisturized catalyst cake as an electrode catalyst precursor cake with a water content ratio of 72.1 wt% that had been obtained in the washing step S2 by performing filtration, washing and dewatering via a filter press, the water content ratio of the moisturized catalyst cake became 5.0 wt% in 145 min in the drying processing step S32 of the drying step S3 as shown in FIG.24; an electrode catalyst with a water content ratio of 5.0 wt% as a target of the process (1) was able to be produced in 145 min.

(2) Process where an electrode catalyst precursor is produced with a kettle in the electrode catalyst precursor producing step S1, an electrode catalyst precursor having a water content ratio of 60 to 80 wt% is then obtained by performing filtration, washing and dewatering via a centrifugal separator in the washing step S2, this electrode catalyst precursor is then dried and coarsely crushed by the stirring treatment device 201 in the drying step S3 to obtain an electrode catalyst having a water content ratio of 1 to 5 wt%, and this electrode catalyst is then crushed by a crusher to obtain an electrode catalyst powder.

In this process as a comparative example, after introducing into the stirring treatment device 201 a moisturized catalyst cake as an electrode catalyst precursor cake with a water content ratio of 72.1 wt% that had been obtained in the washing step S2 by performing filtration, washing and dewatering via a centrifugal separator, the water content ratio of the moisturized catalyst cake became 5.0 wt% in 240 min in the drying processing step S32 of the drying step S3; an electrode catalyst with a water content ratio of 5.0 wt% as a target of the process (2) was able to be produced in 240 min.

[Production of moisturized catalyst cake from electrode catalyst powder]

(3) Process where the electrode catalyst powder obtained in the process (1) is reslurried by a kettle as the reactor 152 in the reslurry step S40, and this electrode catalyst-containing slurry is then dewatered by a centrifugal separator to obtain an electrode catalyst having a water content ratio of 60 to 80 wt%.

In this process, a slurry with a water content ratio of 93.3 wt% that was to be used in the working example 4 was prepared with a kettle, and this slurry was then dewatered with a centrifugal separator to produce a moisturized catalyst cake having a water content ratio of 72.1 wt%.

(4) Process where in the catalyst cake preparation step S50, the electrode catalyst with the water content ratio of 60 to 80 wt% that had been obtained in the process (3) was dried and coarsely crushed by the stirring treatment device 201 to obtain an electrode catalyst having a water content ratio of 20 to 75 wt%, preferably 30 to 70 wt%.

In this process, after introducing a moisturized catalyst cake with a water content ratio of 72.1 wt% into the stirring treatment device 201, the water content ratio of the moisturized catalyst cake became even lower i.e. as low as 20.3 to 69.8 wt% in 5 to 120 min in the drying processing step S32 of the drying step S3 as shown in FIG.24; an electrode catalyst with a water content ratio of 20 to 75 wt% as a target of the process (4) was able to be produced in 5 to 120 min. Further, the water content ratio of the moisturized catalyst cake became 31.3 to 69.8 wt% in 5 to 95 min; an electrode catalyst with a water content ratio of 30 to 70 wt% as a preferable target of the process (4) was able to be produced in 5 to 95 min.

(5) Process where the electrode catalyst powder obtained in the process (1) is reslurried by a kettle as the reactor 152 in the reslurry step S40, this electrode catalyst-containing slurry is then dewatered by a filter press to obtain an electrode catalyst having a water content ratio of 60 to 80 wt%, and this electrode catalyst is then dried and coarsely crushed by the stirring treatment device 201 in the drying step S3 to obtain an electrode catalyst having a water content ratio of 20 to 75 wt%, preferably 30 to 70 wt%.

By comparing (1) and (2), it can be understood from the first embodiment that dewatering can be performed using a filter press instead of a centrifugal separator, and that in such case, the time spent in dewatering can be shortened. Thus, it is assumed that a result similar to that of the process (4) can be achieved by producing a moisturized catalyst cake with a water content ratio of 72.1 wt% by performing dewatering with a filter press, and then by drying and coarsely crushing the catalyst with the stirring treatment device 201.

(6) Process where the electrode catalyst powder obtained in the process (1) is reslurried by a kettle as the reactor 152 in the reslurry step S40, this electrode catalyst-containing slurry is then directly introduced into the stirring treatment device 201 so as to be dried and coarsely crushed by such stirring treatment device 201, thereby obtaining an electrode catalyst having a water content ratio of 20 to 75 wt%, preferably 30 to 70 wt%.

In this process, after introducing into the stirring treatment device 201 a slurry with a water content ratio of 93.3 wt% that had been reslurried by a kettle, the water content ratio of the moisturized catalyst cake became even lower i.e. as low as 41.1 to 74.7 wt% in 87 to 170 min in the drying processing step S32' of the catalyst cake preparation step S50 as shown in FIG.25; although it took somewhat longer than the process (4), an electrode catalyst with a water content ratio of 30 to 70 wt% as a target of the process (6) was able to be produced in 87 to 170 min.

(Reference example)

(7) Process where the electrode catalyst powder obtained in the process (1) and an ion-exchange water are introduced into the stirring treatment device 201 so as to be reslurried, and the electrode catalyst-containing slurry in this stirring treatment device 201 is then dried and coarsely crushed by such stirring treatment device 201 to obtain an electrode catalyst having a water content ratio of 20 to 75 wt%, preferably 30 to 70 wt%.

In this process, it was impossible to reslurry the electrode catalyst powder and the ion-exchange water using the stirring treatment device 201 as described above.

The present invention has so far been described with reference to the embodiment and working example thereof; the invention may be variously modified before exploitation. Especially, there are no particular restrictions on the electrode catalyst precursor production device 12 (reaction step, electrode catalyst precursor producing step S1) and the washing device 13 (washing step S2), and various modified examples may be employed.

For example, in the case of the washing device 13, the structure thereof shall not be limited to that shown in FIG.2, and the structure of the filter chamber 112 shall not be limited to those shown in FIGs.3 to 10 either; various modified examples may be employed so long as the structure(s) is capable of bringing about functions and effects that are similar to those in the steps S21 to S27 of the washing step S2 of the present embodiment and in the compression step of the embodiment. Further, also in the case of the drying device 14, the structure thereof shall not be limited to that shown in FIG.11, and the structure of the container main body 202 shall not be limited to those shown in FIGs.11 to 13 either; various modified examples may be employed so long as the structure(s) is capable of bringing about functions and effects that are similar to those in the steps S31 to S35 of the drying step S3 of the present embodiment.

DESCRIPTION OF SYMBOLS

1 Electrode catalyst
2 Support
3 Catalyst particle
4 Core part
5 Shell part
10 Electrode catalyst production system
12 Electrode catalyst precursor production device
13 Washing device
14 Drying device
201 Stirring treatment device
202 Container main body
204 Stirring blade

222 Rotary main shaft
223 Spiral ribbon impeller
224 Arm (rotor blade supporting pillar)
226 Gas ejection hole
152 Reactor
S1 Electrode catalyst precursor producing step
S2 Washing step
S3 Drying step
S31 Introduction step
S32 Drying processing step
S33 Cooling step
S34 Slow oxidation step
S35 Retrieving step
S36 First property analysis step (first analysis step)
S40 Reslurry step
S50 Catalyst cake preparation step
S60 Second property analysis step (second analysis step)

INDUSTRIAL APPLICABILITY

In the case of the electrode catalyst production method of the present invention, the operation for an operator to transfer the electrode catalyst precursor can be omitted, and the drying time of the electrode catalyst precursor can be shortened, thus making it possible to drastically reduce the time and effort for producing an electrode catalyst having a low halogen content, particularly a low chlorine content.

Thus, the present invention relates to an electrode catalyst production method that is applicable not only to the electric equipment industry manufacturing fuel cells, fuel-cell automobiles, mobile phones and the like, but also to ene-farms, cogeneration systems and the like; the invention contributes to developments related to the energy industry and environmental technologies.

**Claims**

1.  An electrode catalyst production method for producing an electrode catalyst, comprising:

    an electrode catalyst precursor producing step for producing an electrode catalyst precursor as a raw material of an electrode catalyst;
    a washing step for washing the electrode catalyst precursor; and
    a drying step for drying the washed electrode catalyst precursor that has been washed in the washing step, using a stirring treatment device equipped with a stirring blade having a spiral ribbon impeller,

    wherein the drying step includes:

    a drying processing step for drying the electrode catalyst precursor by heating and depressurizing a container main body, and stirring and mixing the electrode catalyst precursor inside the container main body with the stirring blade;
    a cooling step for cooling the electrode catalyst precursor by cooling and depressurizing the container main body, and stirring and mixing the electrode catalyst precursor inside the container main body with the stirring blade; and
    a slow oxidation step for performing a slow oxidation treatment on the cooled electrode catalyst precursor by supplying air to the container main body.

2.  The electrode catalyst production method according to claim 1, further comprising:
    a retrieving step for retrieving the electrode catalyst precursor inside the container main body,
    wherein the retrieving step includes a scraping step for downwardly ejecting a gas from a gas ejection hole provided at a tip of each rotor blade supporting pillar supporting the spiral ribbon impeller.

3.  The electrode catalyst production method according to claim 1, further comprising:

    a first analysis step for analyzing properties of the electrode catalyst precursor obtained through the drying step;

a reslurry step for again preparing a slurry by mixing the electrode catalyst precursor obtained through the drying step and an ion-exchange water; and

a catalyst cake preparation step for preparing multiple solid catalyst cakes with water content ratios thereof being adjusted to those of given ranges, by drying the slurry obtained through the reslurry step.

4. The electrode catalyst production method according to claim 3, wherein a stirring type drying device used in the catalyst cake preparation step is the stirring treatment device.

5. The electrode catalyst production method according to claim 3 or 4, wherein a stirring device-equipped reactor is used in the reslurry step.

6. The electrode catalyst production method according to claim 5, wherein the reactor is the stirring treatment device.

7. The electrode catalyst production method according to any one of claims 3 to 6, wherein the water content ratio of the catalyst cake is lower than 80 wt%.

8. The electrode catalyst production method according to any one of claims 3 to 7, further comprising:
a second analysis step for measuring the water content ratio of the catalyst cake obtained through the catalyst cake preparation step.

**Patentansprüche**

1. Elektrodenkatalysator-Produktionsverfahren zur Herstellung eines Elektrodenkatalysators, umfassend:

einen Elektrodenkatalysatorvorläufer-Produktionsschritt zur Herstellung eines Elektrodenkatalysatorvorläufers als Ausgangsmaterial für einen Elektrodenkatalysator;
einen Waschschritt zum Waschen des Elektrodenkatalysatorvorläufers; und
einen Trocknungsschritt zum Trocknen des gewaschenen Elektrodenkatalysatorvorläufers, der im Waschschritt gewaschen wurde, unter Verwendung einer Rührbehandlungsvorrichtung, die mit einem Rührblatt mit Spiralbandrührer ausgestattet ist,

wobei der Trocknungsschritt umfasst:

einen Trocknungs-Verfahrensschritt zum Trocknen des Elektrodenkatalysatorvorläufers durch Erhitzen und Druckentlasten eines Behälter-Hauptteils und Rühren und Mischen des Elektrodenkatalysatorvorläufers im Behälter-Hauptteils mit dem Rührblatt;
einen Kühlschritt zum Kühlen des Elektrodenkatalysatorvorläufers durch Kühlen und Druckentlasten des Behälter-Hauptteils und Rühren und Mischen des Elektrodenkatalysatorvorläufers im Behälter-Hauptteil mit dem Rührblatt; und
einen langsamen Oxidationsschritt zum Durchführen einer langsamen Oxidationsbehandlung des abgekühlten Elektrodenkatalysatorvorläufers durch Zufuhr von Luft zum Behälter-Hauptteils.

2. Das Elektrodenkatalysator-Produktionsverfahren nach Anspruch 1, weiter umfassend:

einen Gewinnungsschritt zum Gewinnen des Elektrodenkatalysatorvorläufers in dem Behälter-Hauptteil, wobei der Gewinnungsschritt einen Abstreifschritt zum Ablassen von Gas nach unten aus einer Gasausstoßöffnung an der Spitze jeder Rotorblattstütze umfasst, die den Spiralbandrührer trägt.

3. Das Elektrodenkatalysator-Produktionsverfahren nach Anspruch 1, weiter umfassend:

einen ersten Analyseschritt zur Analyse der Eigenschaften des im Trocknungsschritt erhaltenen Elektrodenkatalysatorvorläufers;
einen Wiederaufschlämmungsschritt zur erneuten Herstellung einer Aufschlämmung durch Mischen des im Trocknungsschritt erhaltenen Elektrodenkatalysatorvorläufers mit ionenausgetauschtem Wasser; und
einen Katalysatorkuchenherstellungsschritt zur Herstellung mehrerer fester Katalysatorkuchen mit Wassergehaltsverhältnissen davon, die auf vorgegebene Bereiche durch Trocknen der im Wiederaufschlämmungsschritt erhaltenen Aufschlämmung eingestellt werden.

**4.** Das Elektrodenkatalysator-Produktionsverfahren nach Anspruch 3, wobei eine Rührtypus-Trockenvorrichtung, die im Katalysatorkuchenherstellungsschritt verwendet wird, die Rührbehandlungsvorrichtung ist.

**5.** Das Elektrodenkatalysator-Produktionsverfahren nach Anspruch 3 oder 4, wobei im Wiederaufschlämmungsschritt ein mit einer Rührvorrichtung ausgestatteter Reaktor verwendet wird.

**6.** Das Elektrodenkatalysator-Produktionsverfahren nach Anspruch 5, wobei der Reaktor die Rührbehandlungsvorrichtung ist.

**7.** Das Elektrodenkatalysator-Produktionsverfahren nach einem der Ansprüche 3 bis 6, wobei der Wassergehalt des Katalysatorkuchens weniger als 80 Gew.-% beträgt.

**8.** Das Elektrodenkatalysator-Produktionsverfahren nach einem der Ansprüche 3 bis 7, weiter umfassend:
einen zweiten Analyseschritt zur Messung des Wassergehaltsverhältnisses des im Katalysatorkuchenherstellungsschritt erhaltenen Katalysatorkuchens.

**Revendications**

**1.** Méthode de production de catalyseur d'électrode pour la production d'un catalyseur d'électrode, comprenant :

une étape de production de précurseur de catalyseur d'électrode pour produire un précurseur de catalyseur d'électrode en tant que matière première d'un catalyseur d'électrode ;
une étape de lavage pour laver le précurseur de catalyseur d'électrode ; et
une étape de séchage pour sécher le précurseur de catalyseur d'électrode lavé qui a été lavé à l'étape de lavage, en utilisant un dispositif de traitement sous agitation équipé d'une pale d'agitation ayant une turbine à ruban hélicoïdal,
dans laquelle l'étape de séchage comprend :

une étape de traitement de séchage pour sécher le précurseur de catalyseur d'électrode par chauffage et dépressurisation d'un corps principal de récipient, et agitation et mélange du précurseur de catalyseur d'électrode à l'intérieur du corps principal de récipient avec la pale d'agitation ;
une étape de refroidissement pour refroidir le précurseur de catalyseur d'électrode par refroidissement et dépressurisation du corps principal de récipient, et agitation et mélange du précurseur de catalyseur d'électrode à l'intérieur du corps principal de récipient avec la pale d'agitation ; et
une étape d'oxydation lente pour réaliser un traitement d'oxydation lente sur le précurseur de catalyseur d'électrode refroidi en fournissant de l'air au corps principal de récipient.

**2.** Méthode de production de catalyseur d'électrode selon la revendication 1, comprenant en outre :

une étape d'extraction pour extraire le précurseur de catalyseur d'électrode à l'intérieur du corps principal de récipient,
dans laquelle l'étape d'extraction comprend une étape de raclage pour éjecter vers le bas un gaz depuis un trou d'éjection de gaz disposé à une pointe de chaque pale de rotor supportant une colonne supportant la turbine à ruban hélicoïdal.

**3.** Méthode de production de catalyseur d'électrode selon la revendication 1, comprenant en outre :

une première étape d'analyse pour analyser les propriétés du précurseur de catalyseur d'électrode obtenu par l'étape de séchage ;
une étape de resuspension pour préparer de nouveau une suspension en mélangeant le précurseur de catalyseur d'électrode obtenu par l'étape de séchage et une eau d'échange ionique ; et
une étape de préparation de gâteaux de catalyseur pour préparer des gâteaux de catalyseur solide multiples avec des rapports de teneur en eau de ceux-ci ajustés sur ceux de plages données, en séchant la suspension obtenue par l'étape de resuspension.

**4.** Méthode de production de catalyseur d'électrode selon la revendication 3, dans laquelle un dispositif de séchage de type à agitation utilisé dans l'étape de préparation de gâteaux de catalyseur est le dispositif de traitement sous agitation.

**5.** Méthode de production de catalyseur d'électrode selon la revendication 3 ou 4, dans laquelle un réacteur équipé d'un dispositif d'agitation est utilisé dans l'étape de resuspension.

**6.** Méthode de production de catalyseur d'électrode selon la revendication 5, dans laquelle le réacteur est le dispositif de traitement sous agitation.

**7.** Méthode de production de catalyseur d'électrode selon l'une quelconque des revendications 3 à 6, dans laquelle le rapport de teneur en eau du gâteau de catalyseur est inférieur à 80 % en poids.

**8.** Méthode de production de catalyseur d'électrode selon l'une quelconque des revendications 3 à 7, comprenant en outre :
une deuxième étape d'analyse pour mesurer le rapport de teneur en eau du gâteau de catalyseur obtenu par l'étape de préparation de gâteaux de catalyseur.

FIG.1

FIG.2

FIG.3

FIG.4

FIG.5

FIG.6

FIG.7

FIG.8

FIG.9

FIG.10

FIG.11

FIG.12

FIG.13A

FIG.13B

FIG.13C

FIG.13D

FIG.14

FIG.15

FIG.16

FIG.17

```
┌──────────────────────────┐
│   Raw material of electrode │
│         catalyst          │
└──────────────────────────┘
              │
              ▼
┌──────────────────────────┐
│ Electrode catalyst precursor │ ─── S1
│      producing step        │
└──────────────────────────┘
              │
              ▼
┌──────────────────────────┐
│ Electrode catalyst precursor │ ─── 30
│     -containing liquid     │
└──────────────────────────┘
              │
              ▼
┌──────────────────────────┐
│       Washing step         │ ─── S2
└──────────────────────────┘
              │
              ▼
┌──────────────────────────┐
│  Washed electrode catalyst  │ ─── 41
│        precursor           │
└──────────────────────────┘
              │
              ▼
┌──────────────────────────┐
│       Drying step          │ ─── S3
└──────────────────────────┘
              │
              ▼
┌──────────────────────────┐
│     Electrode catalyst      │ ─── 1
└──────────────────────────┘
```

FIG.18

30

Electrode catalyst precursor
-containing liquid

Plate closing step — S21

Injection step — S22

Normal washing step — S23

Reverse washing step — S24

Plate opening step — S25

Cake peeling step — S26

Filter cloth washing step — S27

Washed electrode catalyst
precursor — 41

FIG.19

Washed electrode catalyst precursor — 41

↓

Introduction step — S31

↓

Drying processing step — S32

↓

Cooling step — S33

↓

Slow oxidation step — S34

↓

Retrieving step — S35

↓

Electrode catalyst — 1

# FIG.20

150

12

Electrode catalyst precursor
production device

13

Washing device

Drying device

14

152

Reactor

154

Reslurry step executor

156

Introduction step
executor

157

Mixing step executor

158

Retrieving step executor

151

Analyzing device

153

First property analysis
executor

161

Second property analysis
executor

FIG.21

**FIG.22**

Schematic view of stirring state

Liquid surface
16cm

Stirring
blade
8cm

**FIG.23**

Run1 Drying curve

| time/min | Moisture ratio D. B. /% | Moisture ratio W. B. /% | Product temperature /°C | Heating temperature /°C |
|---|---|---|---|---|
| 0 | 258.3 | 72.1 | 50 | 20 |
| 5 | 230.8 | 69.8 | 50 | 105 |
| 8 | 206.1 | 67.3 | 50 | 110 |
| 18 | 169.3 | 62.9 | 50 | 110 |
| 25 | 154.0 | 60.6 | 50 | 110 |
| 35 | 138.9 | 58.1 | 50 | 110 |
| 50 | 111.6 | 52.7 | 50 | 110 |
| 65 | 94.1 | 48.5 | 50 | 110 |
| 85 | 62.8 | 38.6 | 50 | 110 |
| 95 | 45.5 | 31.3 | 55 | 110 |
| 120 | 25.4 | 20.3 | 78 | 110 |
| 145 | 5.3 | 5.0 | 90 | 110 |
| 150 | 1.6 | 1.6 | 105 | 110 |
| 180 | 2.3 | 2.2 | 110 | 110 |

FIG.24

Run2 Drying curve

| time/min | Moisture ratio D. B. /% | Moisture ratio W. B. /% | Product temperature /°C | Heating temperature /°C |
|---|---|---|---|---|
| 0 | 1,399.3 | 93.3 | 20 | 20 |
| 15 | 1,221.0 | 92.4 | 50 | 110 |
| 30 | 1,000.1 | 90.9 | 50 | 110 |
| 45 | 668.0 | 87.0 | 50 | 110 |
| 60 | 560.1 | 84.9 | 50 | 110 |
| 75 | 385.4 | 79.4 | 50 | 110 |
| 87 | 295.2 | 74.7 | 50 | 110 |
| 100 | 210.6 | 67.8 | 50 | 110 |
| 110 | 120.7 | 54.7 | 50 | 110 |
| 120 | 144.3 | 59.1 | 50 | 110 |
| 145 | 103.8 | 50.9 | 50 | 110 |
| 170 | 69.9 | 41.1 | 50 | 110 |

FIG.25

**REFERENCES CITED IN THE DESCRIPTION**

**Patent documents cited in the description**

- JP 2013158674 A
- JP 2014042910 A
- JP 5950207 B
- JP 5327000 B